# FASCICULE DE BREVET EUROPEEN

(11) **EP 2 711 579 B1**
(45) Date de publication et mention de la délivrance du brevet: **04.11.2015**
(21) Numéro de dépôt: 13183174.5
(22) Date de dépôt: 05.09.2013
(51) Int. Cl.: F16D 21/06

(54) **Ensemble de transmission de couple, en particulier pour véhicule automobile**
Einheit zur Drehmomentübertragung, insbesondere für Kraftfahrzeug
Torque transmission assembly, in particular for a motor vehicle

(30) Priorité: 24.09.2012 FR 1258948
(43) Date de publication de la demande: 26.03.2014
(73) Titulaire: Valeo Embrayages, 80009 Amiens Cedex 2 (FR)
(72) Inventeur: Lebas, Gilles, 80800 VILLERS BRETONNEUX (FR); Boulet, Jérôme, 60510 OROER (FR); Maurel, Hervé, 80000 AMIENS (FR)
(74) Mandataire: Tran, Chi-Hai

(56) Documents cités:
- DE-A1-102011 081 911
- US-A1- 2008 179 157

## Description

La présente invention concerne un ensemble de transmission de couple, en particulier pour véhicule automobile, comprenant notamment un couplage en rotation d'un double volant amortisseur (DVA) à un double embrayage.

Un double volant amortisseur comporte un volant d'inertie primaire destiné à être couplé en rotation à un arbre menant tel qu'un vilebrequin d'un moteur et un volant d'inertie secondaire destiné à être couplé à un arbre mené tel qu'un arbre d'entrée d'une boîte de vitesses. Un amortisseur de torsion est généralement monté entre les volants primaire et secondaire pour transmettre un couple de rotation entre les volants en absorbant et amortissant les vibrations et les acyclismes de rotation générés par le moteur.

Un double embrayage permet de coupler alternativement l'arbre du moteur d'un véhicule, en général par l'intermédiaire d'un double volant amortisseur, avec deux arbres coaxiaux d'entrée d'une boîte de vitesses, dite boîte de vitesses robotisée.

Le double embrayage permet de changer de rapport de vitesses tout en maintenant la transmission d'un couple moteur aux roues du véhicule. En effet, il comprend habituellement deux embrayages associés respectivement à des rapports de vitesses pairs et impairs. Lors d'un changement de rapport de vitesses, un premier embrayage est embrayé alors que le second embrayage est débrayé.

Chaque embrayage comprend un mécanisme comportant un diaphragme annulaire destiné à coopérer avec un plateau de pression solidaire en rotation d'un couvercle d'embrayage et de l'arbre du moteur. Chaque diaphragme est déplaçable, au moyen d'une butée de commande, entre une position de repos et une position active. Selon le type de l'embrayage, la position active du diaphragme correspond à un couplage ou un découplage des arbres du moteur et de la boîte de vitesses et la position de repos du diaphragme correspond à un découplage ou un couplage de ces arbres du moteur et de la boîte de vitesses.

Chaque plateau de pression, sollicité par le diaphragme correspondant, est destiné à serrer un disque de friction sur un plateau de réaction correspondant. Chaque disque de friction est lié en rotation à un arbre correspondant de boîte de vitesses et chaque plateau de réaction est solidaire en rotation du couvercle d'embrayage et d'un volant lié à l'arbre moteur. Ainsi, le serrage d'un disque de friction entre les plateaux de pression et de réaction correspondants permet la transmission d'un couple entre l'arbre moteur et un arbre d'entrée de la boîte de vitesses.

Le document FR 2 860 845, au nom de la Demanderesse, divulgue la structure et le fonctionnement d'un double embrayage.

Le document US 2008/0179157 divulgue un double embrayage comportant une plaque de liaison annulaire couplée en rotation à un voile annulaire appartenant à un volant secondaire d'un double volant amortisseur.

Le voile du double volant amortisseur comporte des cannelures engagées avec jeu dans des cannelures complémentaires de la plaque de liaison. Un élément annulaire de rattrapage de jeu est monté déplaçable sur le voile annulaire, entre une première position dans laquelle il n'exerce aucune contrainte sur les cannelures (position inactive) et une seconde position dans laquelle il contraint les cannelures de la plaque de liaison contre les cannelures du voile annulaire (position active).

Des ressorts de rappel sont montés entre le voile annulaire et l'élément de rattrapage de jeu, ces ressorts exerçant une action circonférentielle sollicitant l'élément de rattrapage de jeu vers sa seconde position.

L'élément de rattrapage de jeu comporte en outre des languettes formées intégralement avec celui-ci et servant au verrouillage de l'élément de rattrapage de jeu dans sa première position avant son fonctionnement.

Plus précisément, les languettes sont déformables entre une position de verrouillage dans laquelle leurs extrémités libres sont en butée contre des cannelures du voile, et une position de déverrouillage dans laquelle elles ne sont plus en butée contre le voile.

En fonctionnement, compte tenu des jeux, des vibrations et des contraintes mécaniques exercées, il arrive que ces languettes cassent, ce qui empêche le fonctionnement correct de l'ensemble. Un tel ensemble est en outre difficilement réarmable après utilisation. Enfin, il a été constaté que les ressorts de rappel ont tendance à mal se positionner et/ou à fléchir, de sorte qu'ils se dégradent de façon prématurée.

L'invention a notamment pour but d'éviter ces inconvénients de façon simple, efficace et économique.

A cet effet, elle propose un ensemble de transmission de couple, en particulier pour véhicule automobile, comprenant un organe menant comportant des cannelures engagées avec jeu dans des cannelures complémentaires d'un organe mené, un élément de rattrapage de jeu monté déplaçable sur l'organe mené ou sur l'organe menant, entre une première position dans laquelle il n'exerce aucune contrainte sur l'organe mené ou sur l'organe menant et une seconde position dans laquelle il contraint les cannelures de l'un desdits organes contre les cannelures de l'autre organe, des moyens élastiques de rappel sollicitant l'élément de rattrapage de jeu vers sa seconde position, et des moyens de verrouillage mobiles entre une position de verrouillage, dans laquelle ils immobilisent l'élément de rattrapage de jeu dans sa première position, et une position de déverrouillage dans laquelle ils libèrent l'élément de rattrapage de jeu qui peut alors se déplacer vers sa seconde position, les moyens de verrouillage étant aptes à être déplacés vers leur position de déverrouillage par rotation relative de l'organe menant par rapport à l'organe mené dans un cas d'entraînement de l'organe menant par l'organe mené, **caractérisé en ce que** les moyens de verrouillage comportent un élément de verrouillage distinct de l'élément de rattrapage de jeu et mobile par rapport à celui-ci, les moyens élastiques de rappel étant montés entre l'élément de verrouillage et l'élément de rattrapage de jeu, le déverrouillage de l'élément de verrouillage étant obtenu par déplacement relatif entre l'élément de verrouillage et l'élément de rattrapage de jeu.

L'élément de verrouillage étant un élément distinct des autres, il peut être conçu et dimensionné pour assurer spécifiquement la fonction de verrouillage et ainsi être plus résistant et plus fiable.

En outre, le montage des moyens élastiques de rappel entre l'élément de verrouillage et l'élément de rattrapage de jeu facilite leur bon positionnement et évite les phénomènes de flexion et de dégradation précités.

L'ensemble selon l'invention est applicable en particulier au couplage d'un double volant amortisseur et d'un embrayage mais peut également être utilisé pour le couplage d'autres éléments d'une transmission de véhicule automobile.

De préférence, l'élément de rattrapage de jeu et l'élément de verrouillage sont mobiles en rotation par rapport à l'organe mené, l'élément de rattrapage de jeu étant apte à être entraîné en rotation par rapport à l'organe mené, dans un sens dit rétro et sur une plage angulaire P1, dans un cas d'entraînement de l'organe menant par l'organe mené, de façon à entraîner également la rotation de l'élément de verrouillage dans le sens rétro, par l'intermédiaire des organes élastiques, l'organe mené comportant une butée apte à limiter à une plage angulaire P2 la rotation de l'élément de verrouillage dans le sens rétro, la plage angulaire P2 étant inférieure à la plage angulaire P1 de sorte que, une fois que l'élément de verrouillage est immobilisé dans le sens rétro par ladite butée, l'élément de rattrapage de jeu peut encore pivoter dans le sens rétro par rapport à l'élément de verrouillage et déverrouiller ainsi l'élément de verrouillage.

La rotation dans le sens rétro peut notamment se produire lorsque la boîte de vitesses est au point mort ou que l'embrayage est en position débrayée et que le moteur exerce un couple de freinage, appelé frein moteur. Dans certaines applications, une rotation dans le sens rétro peut également se produire en cas d'inversion du sens de rotation du moteur.

Selon une caractéristique de l'invention, l'élément de verrouillage comporte au moins une languette élastique dont l'extrémité libre est apte à venir en appui contre une butée de l'organe de rattrapage de jeu dans la position de verrouillage, ladite languette étant dégagée élastiquement de ladite butée dans la position de déverrouillage de manière à autoriser le déplacement de l'élément de rattrapage de jeu sous l'effet des moyens élastiques de rappel.

L'élément de rattrapage de jeu peut comporter des dents aptes à venir en appui contre les cannelures de l'organe menant ou de l'organe mené dans la seconde position de l'élément de rattrapage de jeu ou en cas d'entraînement de l'organe menant par l'organe mené.

En outre, l'élément de verrouillage peut être monté sur l'organe mené par l'intermédiaire d'au moins un rivet engagé dans une ouverture oblongue de l'élément de verrouillage, l'appui du rivet sur l'une des extrémités de ladite ouverture formant la butée permettant de limiter la rotation de l'élément de verrouillage dans le sens rétro.

Dans ce cas, ledit rivet peut également servir au montage de l'élément de rattrapage de jeu sur l'organe mené.

Selon une autre caractéristique de l'invention, l'élément de verrouillage et l'élément de rattrapage de jeu sont annulaires et comportent des moyens complémentaires permettant d'immobiliser axialement l'élément de verrouillage par rapport à l'élément de rattrapage de jeu tout en autorisant leur rotation relative.

Ceci permet de pouvoir assembler un sous-ensemble formé au moins de l'élément de rattrapage de jeu et de l'élément de verrouillage, avant montage de ce sous-ensemble sur l'organe mené. Le montage de l'ensemble peut ainsi être simplifié ou facilité.

Selon une forme de réalisation de l'invention, l'élément de verrouillage, respectivement l'élément de rattrapage de jeu, comporte au moins une gorge dans laquelle est engagé un bord périphérique interne ou externe de l'élément de rattrapage de jeu, respectivement de l'élément de verrouillage.

Dans ce cas, la gorge peut être délimitée par une paroi radiale de l'élément de verrouillage, respectivement par une paroi radiale de l'élément de rattrapage de jeu, et par une patte.

Selon une autre forme de réalisation de l'invention, l'élément de verrouillage comporte une surface de came apte à coopérer avec une surface de came complémentaire de l'organe mené, l'élément de verrouillage comportant une butée apte à venir en appui sur une surface d'appui de l'élément de rattrapage de jeu dans sa position verrouillée et apte à être décalée de ladite surface d'appui dans sa position déverrouillée, l'élément de verrouillage étant apte à passer de sa position verrouillée à sa position déverrouillée par coopération desdites surfaces de cames.

L'élément de verrouillage peut comporter une zone d'appui destinée à venir en appui contre l'organe mené après déverrouillage.

En outre, les surfaces de came de l'élément de verrouillage et de l'élément de rattrapage de jeu peuvent être conçues pour décaler axialement la butée de l'élément de verrouillage par rapport à la surface d'appui correspondante de l'élément de rattrapage de jeu, de façon à déverrouiller l'élément de verrouillage.

En variante, l'élément de verrouillage peut être monté basculant par rapport à l'élément de rattrapage de jeu, entre une position verrouillée et une position déverrouillée, les surfaces de came desdits éléments étant aptes à entraîner le basculement de l'élément de verrouillage vers sa position de déverrouillage.

Dans ce cas, l'élément de verrouillage peut comporter un trou oblong dans lequel est monté un plot de l'élément de rattrapage de jeu.

Avantageusement, l'organe menant est une partie d'un double volant amortisseur et l'organe mené est une partie d'un embrayage.

L'invention concerne également un procédé de montage d'un ensemble du type précité, **caractérisé en ce qu'il** comporte les étapes consistant à :
- monter l'élément de rattrapage de jeu sur l'organe mené,
- monter l'élément de verrouillage sur l'organe mené,
- positionner l'élément de verrouillage par rapport à l'élément de rattrapage de jeu de façon à pouvoir engager les moyens élastiques de rappel entre lesdits éléments,
- monter les moyens élastiques de rappel entre l'élément de verrouillage et l'élément de rattrapage de jeu,
- positionner l'élément de verrouillage par rapport à l'élément de rattrapage de jeu de façon à pouvoir verrouiller l'élément de verrouillage, en contraignant les moyens élastiques de rappel,
- verrouiller l'élément de verrouillage.

Les étapes précitées ne sont pas nécessairement successives. C'est ainsi notamment que l'élément de verrouillage peut être monté sur l'organe mené avant l'élément de rattrapage de jeu.

L'invention concerne également un autre procédé de montage d'un ensemble du type précité, **caractérisé en ce qu'il** comporte les étapes consistant à :
- assembler l'élément de verrouillage et l'élément de rattrapage de jeu à l'aide des moyens complémentaires permettant d'immobiliser axialement l'élément de verrouillage par rapport à l'élément de rattrapage de jeu tout en autorisant leur rotation relative,
- positionner l'élément de verrouillage par rapport à l'élément de rattrapage de jeu de façon à pouvoir engager les moyens élastiques de rappel entre lesdits éléments,
- monter les moyens élastiques de rappel entre l'élément de verrouillage et l'élément de rattrapage de jeu,
- monter le sous-ensemble formé précédemment sur l'organe mené,
- positionner l'élément de verrouillage par rapport à l'élément de rattrapage de jeu de façon à pouvoir verrouiller l'élément de verrouillage, en contraignant les moyens élastiques de rappel,
- verrouiller l'élément de verrouillage.

Comme précédemment, les étapes précitées ne sont pas nécessairement successives. C'est ainsi notamment que les moyens élastiques peuvent être montés entre l'élément de verrouillage et l'élément de rattrapage de jeu, après que le sous-ensemble formé par assemblage de ces deux éléments a été monté sur l'organe mené.

Enfin, l'élément de verrouillage peut être verrouillé en positionnant l'extrémité libre de la languette élastique en appui contre la butée correspondante de l'organe de rattrapage de jeu, à l'encontre de la force de rappel élastique de la languette, cette position de verrouillage de la languette élastique étant maintenue par la contrainte exercée par les moyens élastiques de rappel.

L'invention sera mieux comprise et d'autres détails, caractéristiques et avantages de l'invention apparaîtront à la lecture de la description suivante faite à titre d'exemple non limitatif en référence aux dessins annexés dans lesquels :
- les figures 1 et 2 sont des vues en perspective d'un ensemble selon une première forme de réalisation, respectivement de l'arrière et de l'avant,
- les figures 3 à 7, 9 et 11 sont des vues en perspective illustrant les étapes successives de montage de l'ensemble des figures 1 et 2,
- la figure 8 est une vue de détail, en perspective, illustrant la position d'une languette de l'élément de verrouillage dans l'étape de montage de la figure 7,
- la figure 10 est une vue de détail, en perspective, illustrant la position de la languette précitée dans l'étape de montage de la figure 9,
- la figure 12 est une vue en perspective et en coupe de l'ensemble, dans un cas de fonctionnement correspondant à un entraînement de l'organe mené par l'organe menant,
- les figures 13 à 15 sont des vues de détail et en coupe, montrant les positions successives de l'élément de verrouillage et de l'élément de rattrapage de jeu, par rapport à l'organe mené et par rapport à un rivet de montage formant une butée.
- la figure 16 est une vue correspondant à la figure 12, dans laquelle les languettes sont en position déverrouillée,
- les figures 17 à 19 sont des vues en perspectives illustrant une seconde forme de réalisation de l'invention dans laquelle un sous-ensemble est formé par l'assemblage de l'élément de verrouillage et de l'élément de rattrapage de jeu,
- les figures 20 et 21 sont des vues en perspective d'un ensemble selon une troisième forme de réalisation, en position verrouillée des éléments de verrouillage,
- la figure 22 est une vue correspondant à la figure 20, dans laquelle l'élément de rattrapage de jeu est dans sa position active,
- la figure 23 est une vue en perspective d'un élément de verrouillage de l'ensemble des figures 20 et 21,
- les figures 24 et 25 sont des vues en perspective d'un ensemble selon une quatrième forme de réalisation, en position verrouillée des éléments de verrouillage,
- la figure 26 est une vue en perspective de l'organe mené,
- la figure 27 est une vue en perspective d'un élément de verrouillage de l'ensemble des figures 24 et 25,
- la figure 28 est une vue correspondant à la figure 25, dans laquelle les éléments de verrouillage sont en position déverrouillée,
- la figure 29 est une vue de face de l'ensemble de la figure 28,
- la figure 30 est une vue correspondant aux figures 25 et 28, dans laquelle l'élément de rattrapage de jeu est dans sa position active,
- la figure 31 est une vue de face de l'ensemble de la figure30.

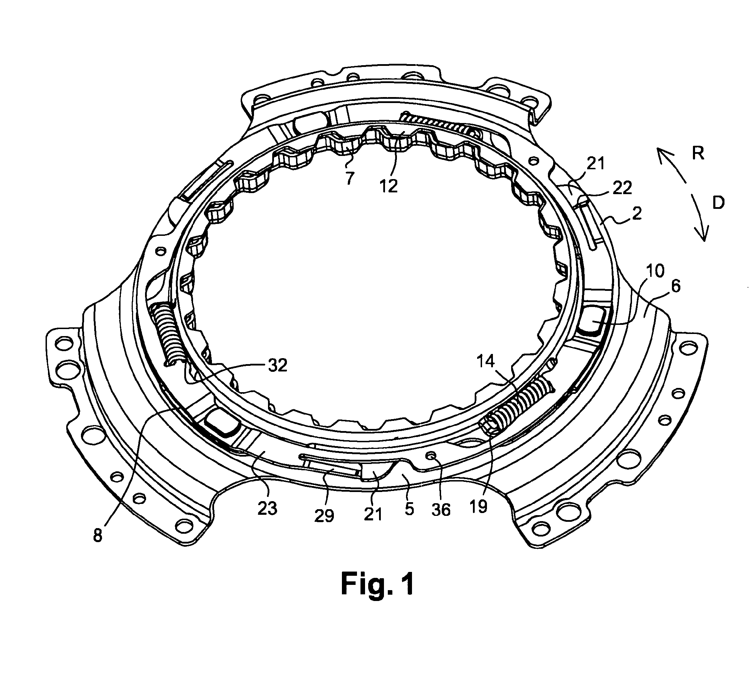

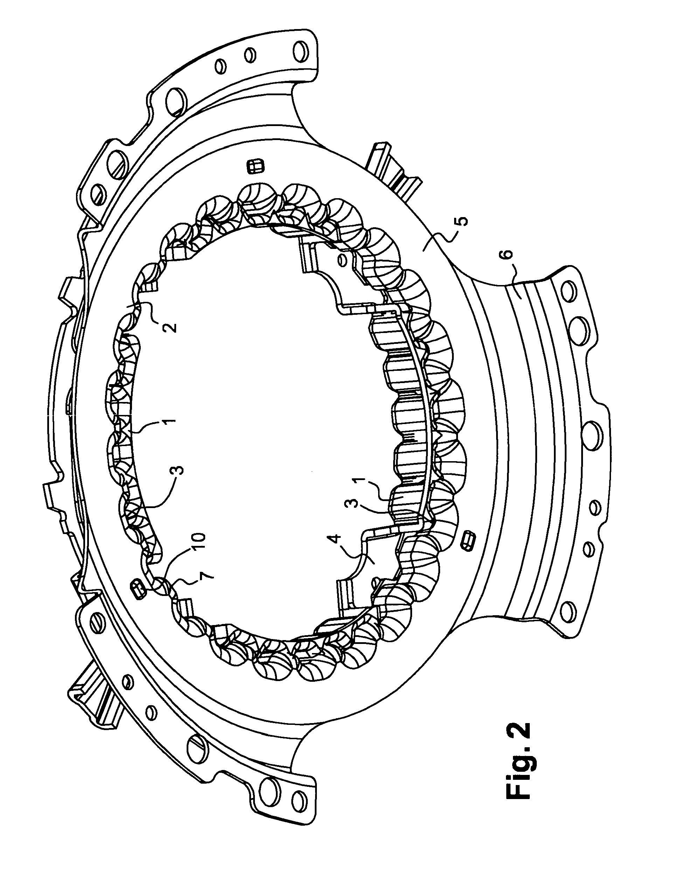

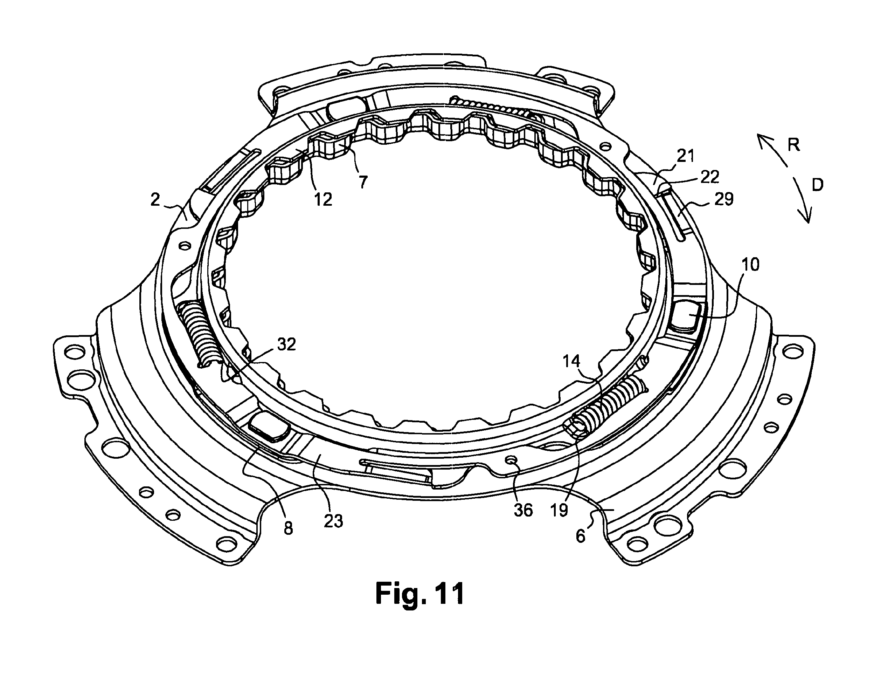

Une première forme de réalisation d'un ensemble de transmission de couple est illustrée aux figures 1 à 16. Cet ensemble comprend un organe menant, formé par exemple par une pièce 1 rattachée à un voile annulaire d'un double volant amortisseur d'un véhicule automobile (ou monobloc avec le voile), et un organe mené, formé par exemple par une plaque de liaison 2 à un double embrayage. L'organe menant 1 n'est représenté qu'à la figure 2. Il n'est pas représenté sur les autres figures. L'organe menant 1 comporte des cannelures 3 à sa périphérie radialement externe et des pattes 4 faisant saillie radialement vers l'intérieur, servant au montage sur le voile annulaire du double volant amortisseur.

La plaque de liaison 2 comporte une partie annulaire 5 à partir de laquelle des pattes 6 radiales, destinées à être fixées à un plateau central (plateau de réaction) du mécanisme d'embrayage, s'étendent radialement vers l'extérieur. La plaque de liaison 2 comporte en outre des cannelures 7 à sa périphérie radialement interne, coopérant avec les cannelures 3 de l'organe menant 1. En particulier, les cannelures 3 et 7 sont montées avec jeu les unes dans les autres.

Un tel jeu est nécessaire pour faciliter le montage de l'organe mené 2 sur l'organe menant 1, ce montage pouvant notamment être effectué « en aveugle ». Le jeu autorise une rotation relative du voile annulaire (ou organe menant 1) par rapport à la plaque de liaison (ou organe mené 2).

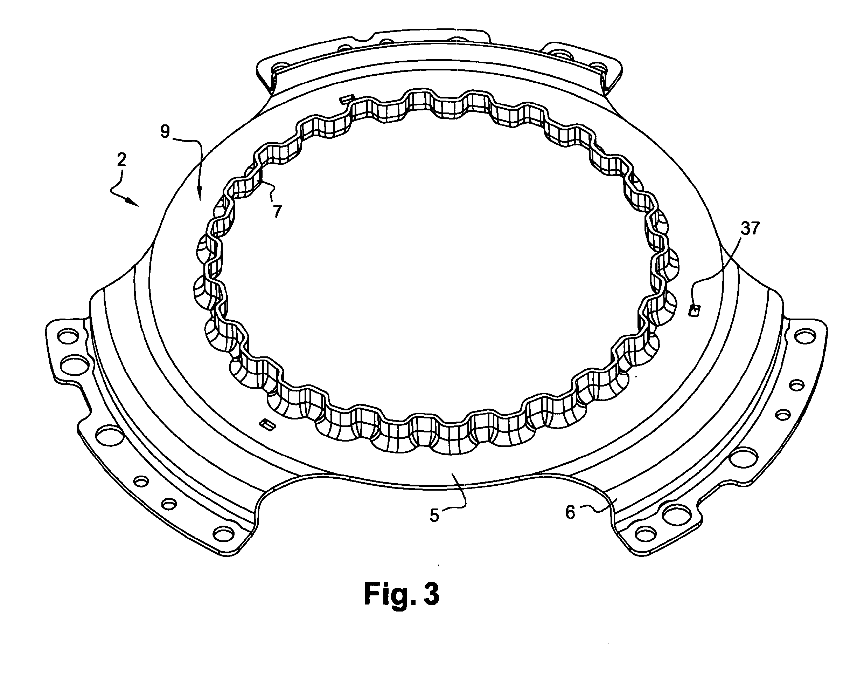

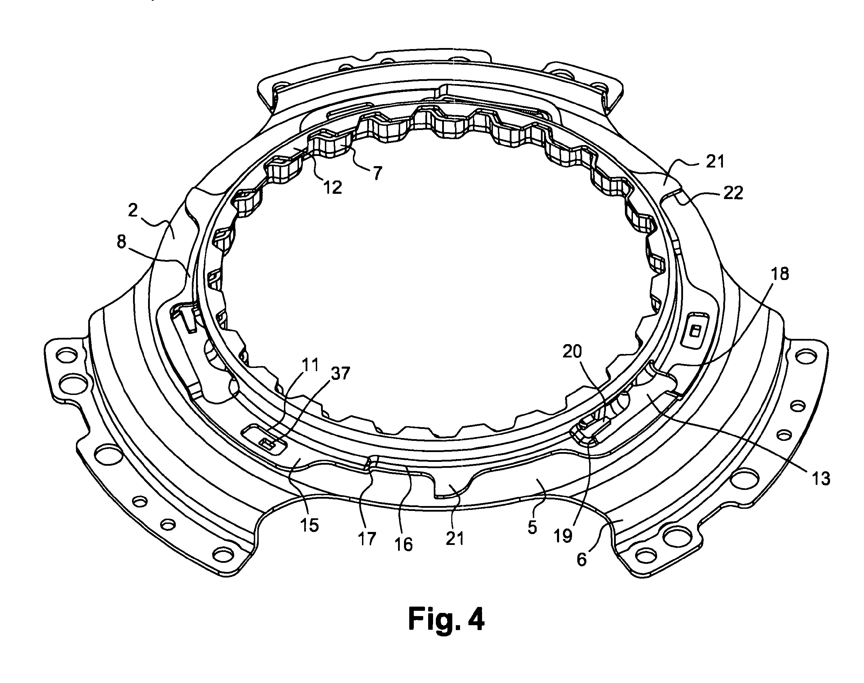

Un élément annulaire de rattrapage de jeu 8 (voir en particulier figure 4) est monté sur la face arrière 9 (figure 3) de la plaque de liaison 2, par l'intermédiaire de rivets 10 montés dans des ouvertures oblongues 11 de l'élément de rattrapage de jeu 8 (figure 4). Plus particulièrement, les ouvertures oblongues 1 1 , en forme d'arc de cercle, autorisent un débattement angulaire P1 de l'élément de rattrapage de jeu 8 par rapport à la plaque de liaison 2, d'une valeur comprise entre 2 et 3°, préférentiellement de l'ordre de 3 .

La périphérie radialement interne de l'élément de rattrapage de jeu comporte des dents 12 de formes similaires à celles des cannelures 7 de la plaque de liaison 2.

Les dents 12 sont également décalées des cannelures 7, par exemple d'un angle de 2°.

Le débattement angulaire entre les organes mené 2 et menant 1 est supérieur au débattement angulaire entre l'élément de rattrapage de jeu 8 et l'organe mené 2.

L'élément de rattrapage de jeu 8 comporte en outre des fenêtres 13 (figure 4) servant au logement de ressorts de rappel 14.

Plus particulièrement, comme cela est mieux visible à la figure 4, l'élément de rattrapage de jeu 8 comporte des premières zones 15 globalement planes et s'étendant radialement, plaquées axialement en appui contre la partie annulaire radiale 5 de la plaque de liaison 2, et des secondes zones 16 s'étendant également radialement, décalées axialement vers l'arrière par rapport aux première zones 15. Des zones de liaison courbes 17 relient les premières et les secondes zones 15, 16.

Chaque fenêtre 13 est située à cheval sur une première et une seconde zone 15, 16. Plus particulièrement, chaque fenêtre 13 comporte une première extrémité 18 formée au niveau d'une première zone 15, et une seconde extrémité 19 formée au niveau d'une seconde zone 16. La seconde extrémité 19 de chaque fenêtre 13 comporte un plot de centrage 20 apte à être engagé dans une extrémité d'un ressort hélicoïdal 14, comme cela sera mieux décrit après.

Les secondes zones 16 de l'élément de rattrapage de jeu comportent en outre des butées 21 s'étendant radialement vers l'extérieur et comprenant chacune une surface de butée 22 radiale.

Un élément de verrouillage annulaire 23 est en outre monté sur la face arrière de l'élément de rattrapage de jeu 8.

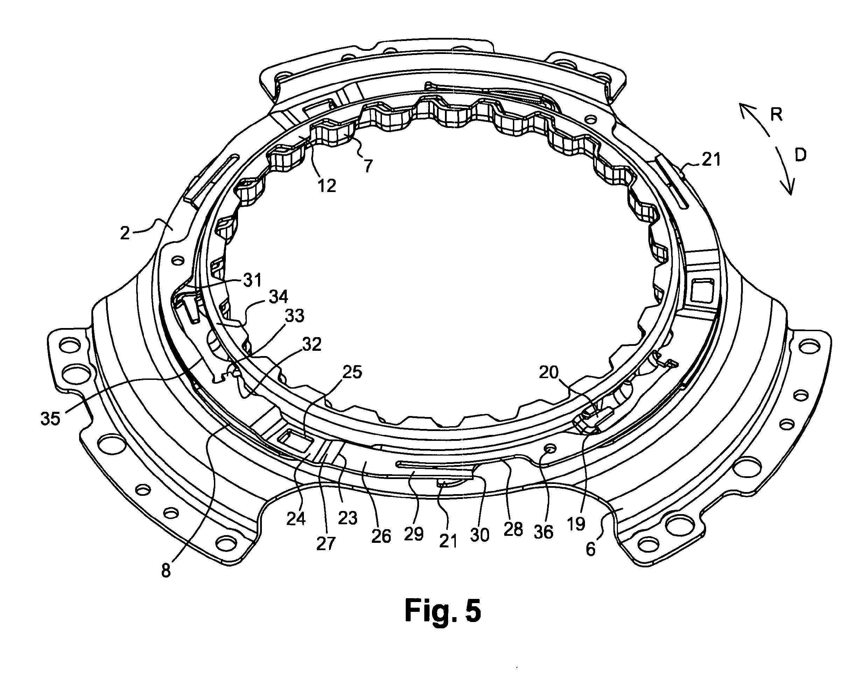

Comme cela est mieux visible à la figure 5, l'élément de verrouillage annulaire 23 comporte des premières zones 24 planes et radiales, situées en regard des premières zones 15 de l'élément de rattrapage de jeu 8. Les premières zones 24 comportent des ouvertures oblongues 25, en forme d'arc de cercle, autorisant un débattement angulaire P2 de l'élément de verrouillage 23 par rapport à la plaque de liaison 2, d'une valeur comprise entre 1 et 2°, préférentiellement de l'ordre de 2 °. On notera que le débattement angulaire P2 de l'élément de verrouillage 23 est inférieur au débattement angulaire P1 de l'élément de rattrapage de jeu 8.

L'élément de verrouillage 23 comporte en outre des secondes zones 26 radiales décalées axialement vers l'arrière par rapport aux premières zones 24. Les zones 24 et 26 sont reliées par des zones courbes 27.

Les secondes zones 26 comportent des découpes 28 au niveau de leur bord périphérique externe, dans lesquelles sont formées des languettes 29 élastiques s'étendant circonférentiellement. Les extrémités libres 30 des languettes 29 sont destinées à coopérer avec les faces de butée 22 de l'élément de rattrapage de jeu 8, comme cela sera mieux décrit après. Dans leur position de repos, les extrémités libres 30 des languettes 29 sont décalées axialement vers l'arrière par rapport aux faces de butée 22. Cependant, les languettes 29 peuvent être contraintes de façon à ce que leurs extrémités libres 30 soient en appui sur lesdites faces de butée 22.

D'autres découpes 31 sont formées au niveau du bord périphérique interne des secondes zones 26 de l'élément de verrouillage 23, chaque découpe 31 définissant une face radiale 32 à partir de laquelle s'étend un plot de centrage 33.

L'élément de verrouillage 23 et l'élément de rattrapage de jeu 8 sont en contact au niveau des fenêtres 13 et des découpes 31, afin d'assurer l'alignement des moyens de centrage des ressorts 14.

Les ressorts hélicoïdaux de compression 14 sont montés entre l'élément de rattrapage de jeu 8 et l'élément de verrouillage 23. Plus particulièrement, chaque ressort 14 comporte une première extrémité engagée sur un plot de centrage 20 de l'élément de rattrapage de jeu 8 et prenant appui sur la seconde extrémité 19 de la fenêtre 13 correspondante et une seconde extrémité engagée sur un plot de centrage 33 de l'élément de verrouillage 23 et prenant appui sur la face radiale 32 correspondante.

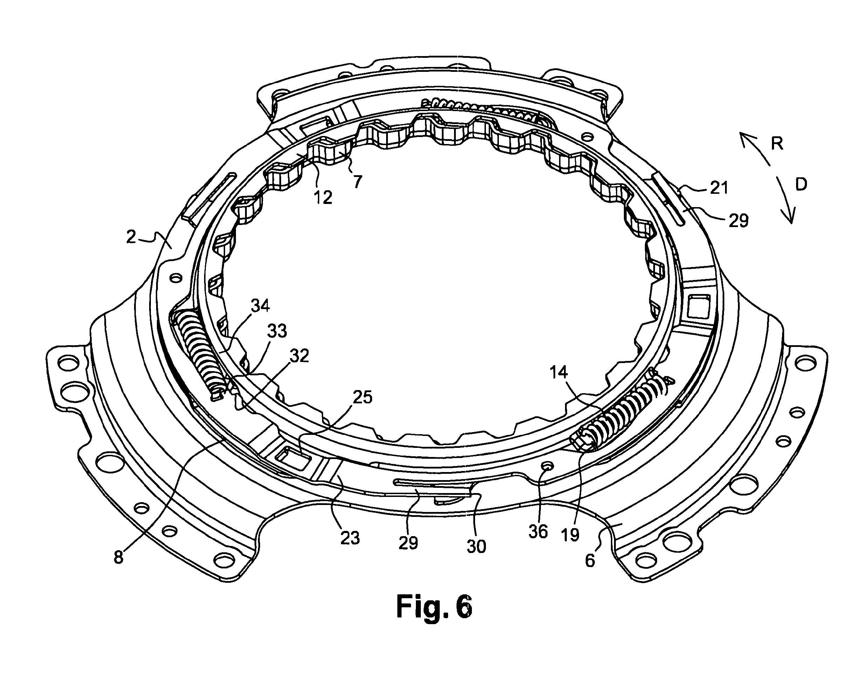

La flexion du ressort 14 est limitée, radialement vers l'intérieur, par une partie annulaire 34 (figures 5 et 6) de l'élément de rattrapage de jeu 8 et, radialement vers l'extérieur, par un bord 35 de la découpe 31 s'étendant circonférentiellement.

Des trous 36 sont également ménagés dans les secondes zones 26 de l'élément de verrouillage 23, de manière à pouvoir le manipuler aisément, en particulier afin de le faire pivoter par rapport à l'élément de rattrapage de jeu 8 et comprimer les ressorts 14 puis comprimer les languettes 29 de l'élément 23 de telle manière que la face 30 arrive en contact avec la face 22 de l'élément 8.

Les rivets 10 sont fixés dans des trous 37 (figure 3) de la plaque de liaison 2 et sont engagés dans les ouvertures oblongues 11, 25 de l'élément de rattrapage de jeu 8 et de l'élément de verrouillage 23, situées en regard les uns des autres.

Lesdits éléments 8, 23 et la plaque de liaison 2 sont ainsi plaqués axialement les uns contre les autres mais sont libres de pivoter dans la limite des débattements précités.

La plaque de liaison 2, l'élément de rattrapage de jeu 8 et l'élément de verrouillage 23 peuvent être formés par découpage et emboutissage de tôles.

Bien entendu, cet ensemble n'est pas limité au couplage d'un double volant amortisseur et d'un embrayage. Il peut également être utilisé afin de coupler d'autres éléments d'une transmission d'un véhicule automobile.

Un exemple de procédé de montage d'un tel ensemble de transmission de couple va maintenant être décrit en référence aux figures 3 à 11.

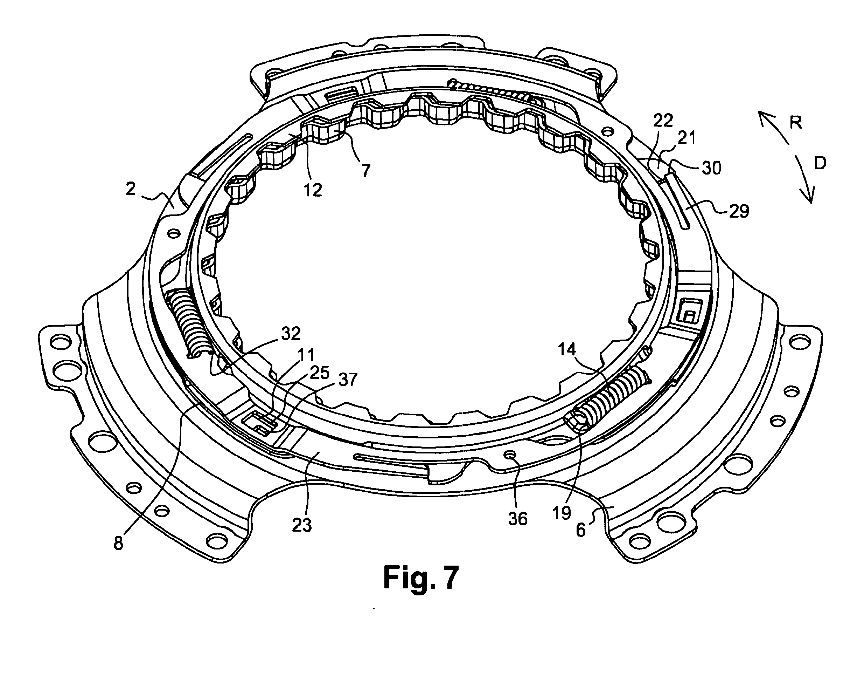

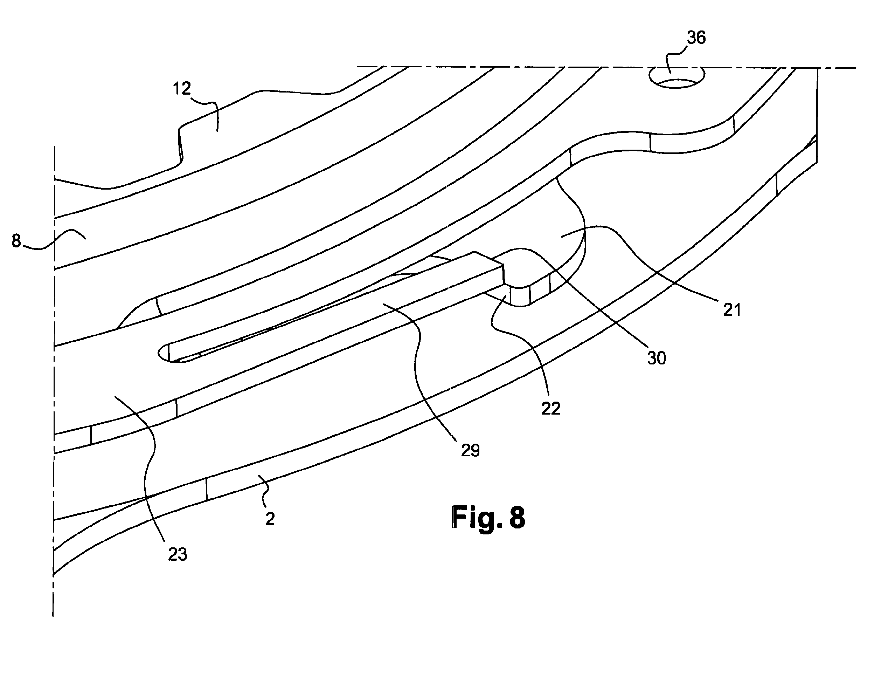

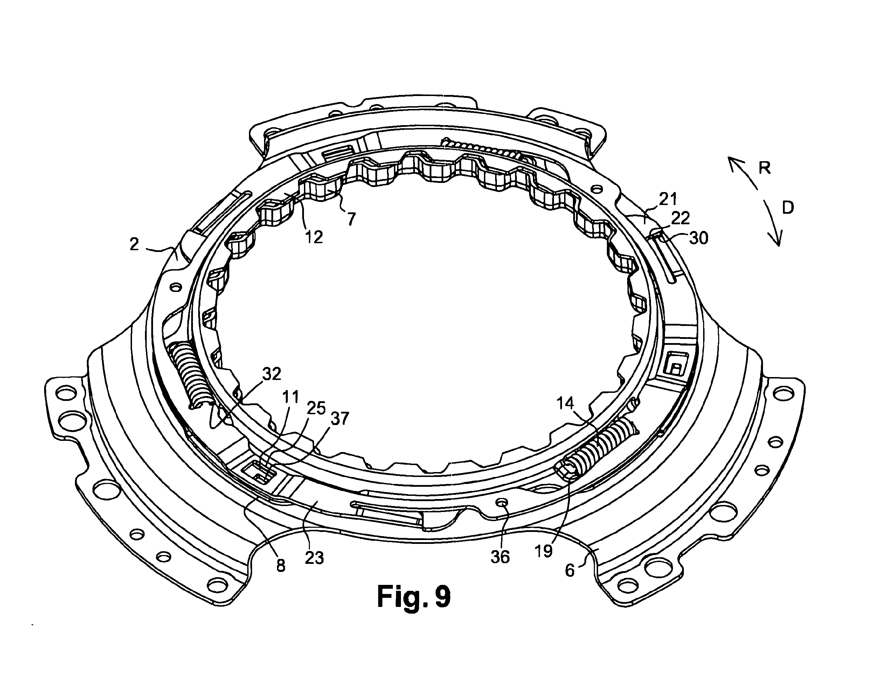

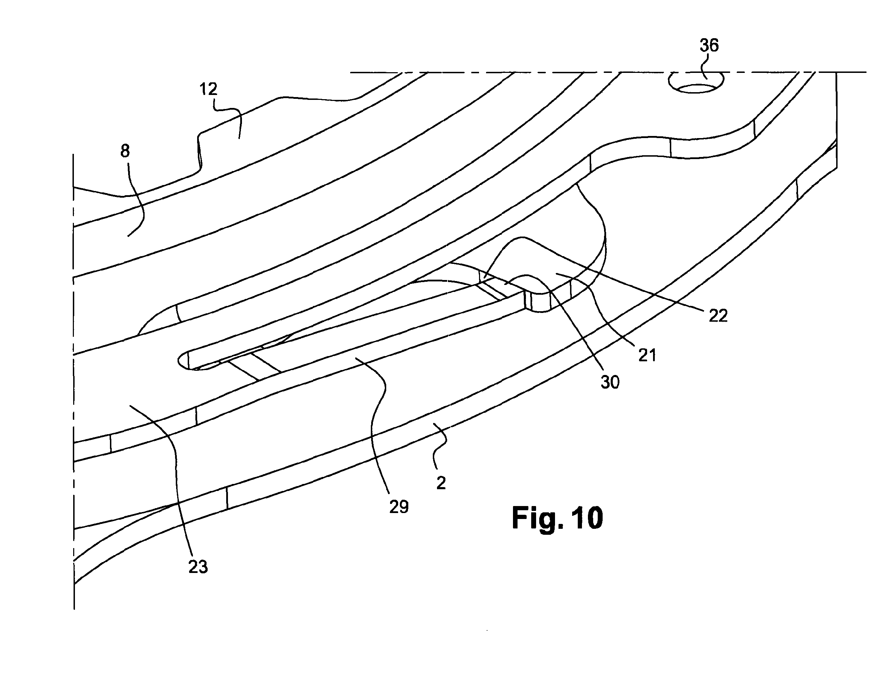

Lors d'un tel montage, on positionne tout d'abord la plaque de liaison 2 (figure 3) sur une base (non représentée), puis on place l'élément de rattrapage de jeu 8 sur la face arrière 9 de la partie annulaire 5 de la plaque de liaison 2, en positionnant les ouvertures 11 de l'élément de rattrapage de jeu 8 en regard des trous 37 de la plaque de liaison 2 (figure 4). On place ensuite l'élément de verrouillage 23 sur la face arrière de l'élément de rattrapage de jeu 8 de façon à pouvoir monter les ressorts de rappel 14 (figure 5 et 6). On monte les ressorts de rappel (14) entre l'élément de rattrapage de jeu 8 et l'élément de verrouillage 23, en engageant les extrémités des ressorts 14 dans les plots de centrage 20, 33 correspondants (figure 6). L'élément de verrouillage 23 est ensuite pivoté par rapport à l'élément de rattrapage de jeu 8 (à l'aide des trous 36), à l'encontre de l'effort de rappel exercé par les ressorts 14, jusqu'à ce que les extrémités libres 30 des languettes 29 soient situées au droit des faces 22 des butées 21 correspondantes (figures 7 et 8). Dans cette position, les extrémités libres 30 des languettes 29 sont encore écartées axialement des faces de butée 22 (position de déverrouillage), comme cela est mieux visible à la figure 8. Les languettes 29 peuvent ensuite être déformées élastiquement, de façon à amener les extrémités libres 30 au contact des faces de butée 22 (figures 9 et 10). Sous l'action des ressorts 14, les languettes 29 sont ainsi coincées dans leur position de verrouillage dans laquelle elles coopèrent avec les butées 21, comme cela est mieux visible à la figure 10. Dans cette position, les languettes 29 immobilisent l'élément de rattrapage de jeu 8 par rapport à l'élément de verrouillage 23. Enfin, les rivets 10 sont montés dans les trous 37 et dans les ouvertures 11, 25 de manière à maintenir l'élément de rattrapage de jeu 8 et l'élément de verrouillage 23 sur la plaque de liaison 2.

Le fonctionnement de cet ensemble de transmission va maintenant être décrit.

En fonctionnement, la transmission du couple peut s'effectuer dans deux sens de rotation opposés, respectivement dans un sens direct (flèche D), correspondant au sens d'entraînement de l'organe mené 2 par l'organe menant 1, et dans un sens de rotation opposé, dit sens rétro (flèche R).

La rotation des organes menant 1 et mené 2 dans le sens rétro R peut notamment se produire lorsque la boîte de vitesses est au point mort ou que l'embrayage est en position débrayée et que le moteur exerce un couple de freinage, appelé frein moteur. Dans certaines applications, une rotation dans le sens rétro peut également se produire en cas d'inversion du sens de rotation du moteur.

initialement, c'est-à-dire après montage avec jeu des cannelures 3 de l'organe menant 1 dans les cannelures 7 de l'organe mené 2, l'élément de rattrapage de jeu 8 est en position inactive : il n'applique aucun effort sur les cannelures 3, 7 desdits organes 1, 2.

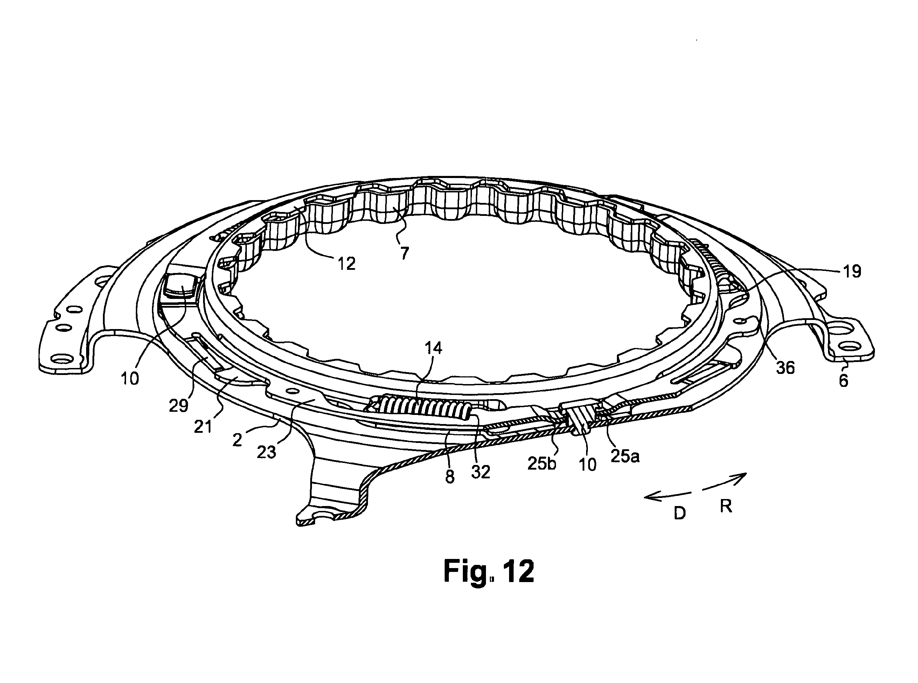

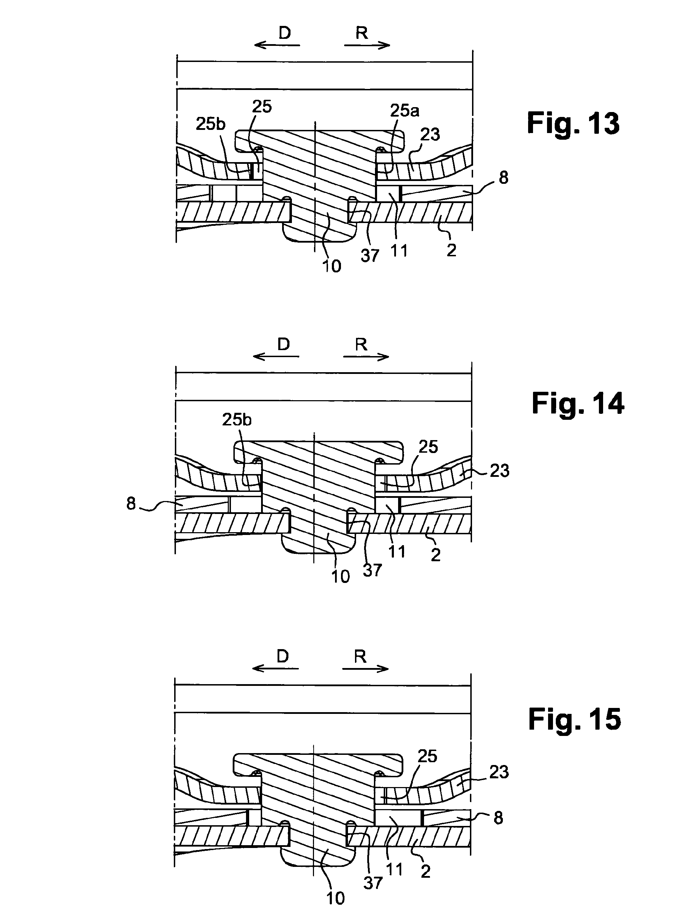

Dans cette position inactive (figures 12 et 13), les extrémités libres 30 des languettes 29 de l'élément de verrouillage 23 sont maintenues en appui sur les faces 22 des butées 21 de l'élément de rattrapage de jeu 8 par les ressorts de rappel 14. L'élément de verrouillage 23 est donc en position verrouillée et l'élément de verrouillage 23 ne peut pas pivoter par rapport à l'élément de rattrapage de jeu 8. Les rivets 10 sont en appui sur des premières extrémités 25a des ouvertures oblongues 25 de l'élément de verrouillage 23 (figures 12 et 13). Le contact au niveau des extrémités 25a est utile pour minimiser l'ouverture de la denture entre les éléments 23 et 2, dans le but de faciliter la pénétration de la denture 3 de l'élément 1. Un tel contact n'est toutefois pas obligatoire.

Si la transmission fonctionne dans le sens direct D, les cannelures 3 de l'organe menant 1 viennent en appui contre celles 7 de l'organe mené 2, l'organe menant 1 entraînant ainsi en rotation l'organe mené 2.

Dès que la transmission fonctionne dans un sens rétro R, l'organe mené 2 pivote par rapport à l'organe menant 1, du fait du jeu entre les cannelures 3, 7 desdits organes 1, 2.

Lors de ce pivotement (sur un angle limité), les cannelures 3 de l'organe menant 1 prennent appui sur les dents 12 de l'élément de rattrapage de jeu 8, qui pivote alors dans le sens rétro R par rapport à l'organe mené 2. L'élément de rattrapage de jeu 8 entraîne avec lui l'élément de verrouillage 23, dans le sens rétro R, par l'intermédiaire des ressorts de rappel 14 qui sont déjà sous contrainte, c'est-à-dire compressés.

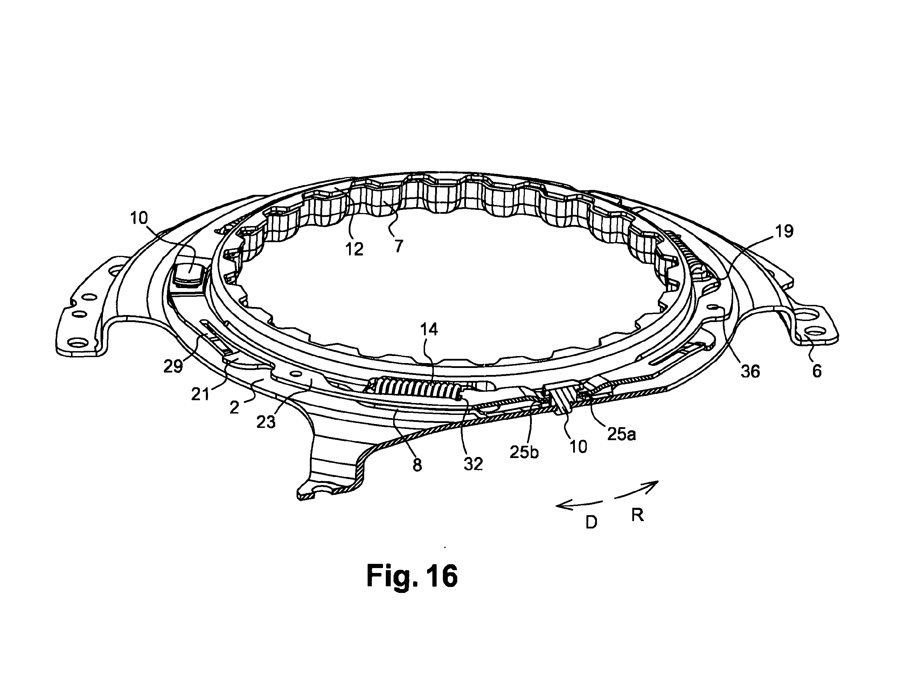

Lors de ce pivotement, l'élément de verrouillage 23 vient en butée contre les rivets 10, au niveau des secondes extrémités 25b des ouvertures oblongues 25 (figures 14 et 16). A partir de cet instant, l'élément de verrouillage 23 est immobilisé en rotation par rapport à l'organe mené 2 mais l'élément de rattrapage de jeu 8 (qui continue d'être entrainé en rotation dans le sens rétro R par les cannelures 3 de l'organe menant 1) poursuit sa rotation par rapport à l'organe mené 2. En d'autres termes, l'élément de rattrapage de jeu 8 pivote dans le sens rétro R par rapport à l'élément de verrouillage 23. Ceci provoque le dégagement des extrémités libres 30 des languettes 29 par rapport aux faces de butée 22, les languettes 29 retrouvant ainsi leur position de repos dans laquelle lesdites extrémités libres 30 sont décalées axialement des faces de butée 22 correspondantes : l'élément de verrouillage 23 est déverrouillé. Dès lors, sous l'action des ressorts de rappel 14, l'élément de rattrapage de jeu 8 peut pivoter librement dans le sens direct D par rapport à l'organe mené 2. Les dents 12 de l'élément de rattrapage de jeu 8 sont alors contraintes en appui contre les cannelures 3 de l'organe menant 1 de manière à rattraper le jeu formé entre l'organe mené 2 et l'organe menant 1 : l'élément de rattrapage de jeu 8 est dans sa position active.

Lors des rotations suivantes dans le sens direct D ou rétro R, l'élément de rattrapage de jeu 8 reste en position active, sous l'action des ressorts de rappel 14. En effet, sauf réarmement volontaire, les languettes 29 ne peuvent pas retrouver leur position verrouillée car leur position de repos est la position déverrouillée.

Le jeu entre les organes menant 1 et mené 2 est ainsi réduit ou annulé, ce qui permet de réduire le bruit et l'usure de ces organes 1, 2 en fonctionnement.

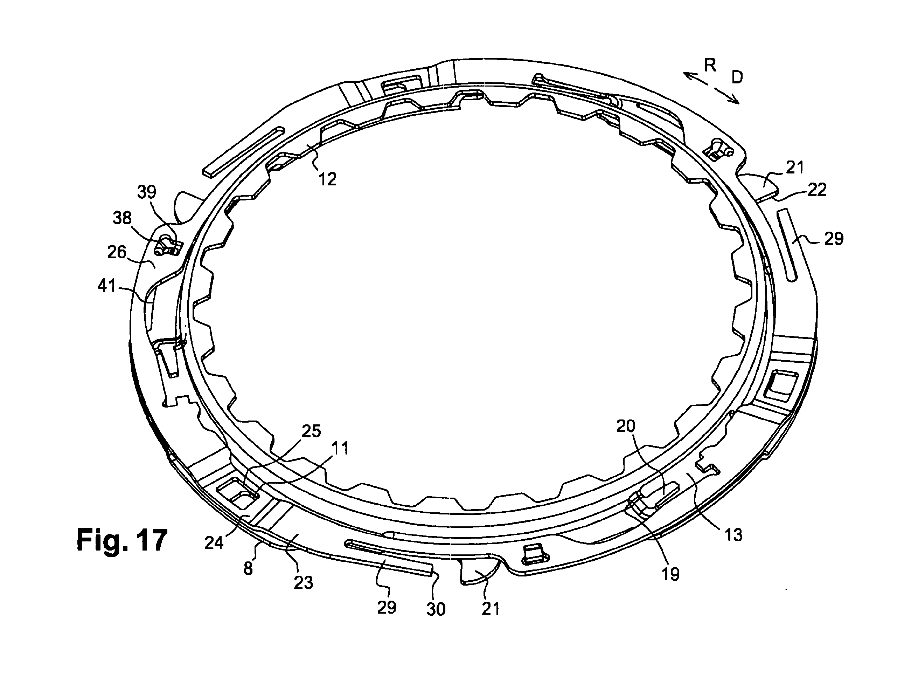

Les figures 17 à 19 représentent un élément de rattrapage de jeu 8 et un élément de verrouillage 23 d'un ensemble de transmission de couple selon une seconde forme de réalisation de l'invention.

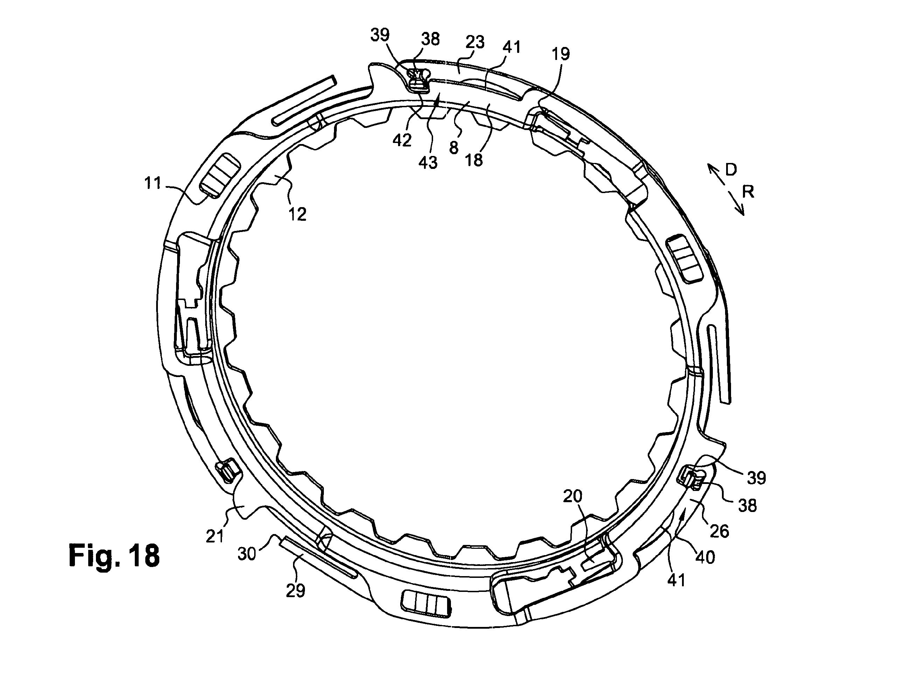

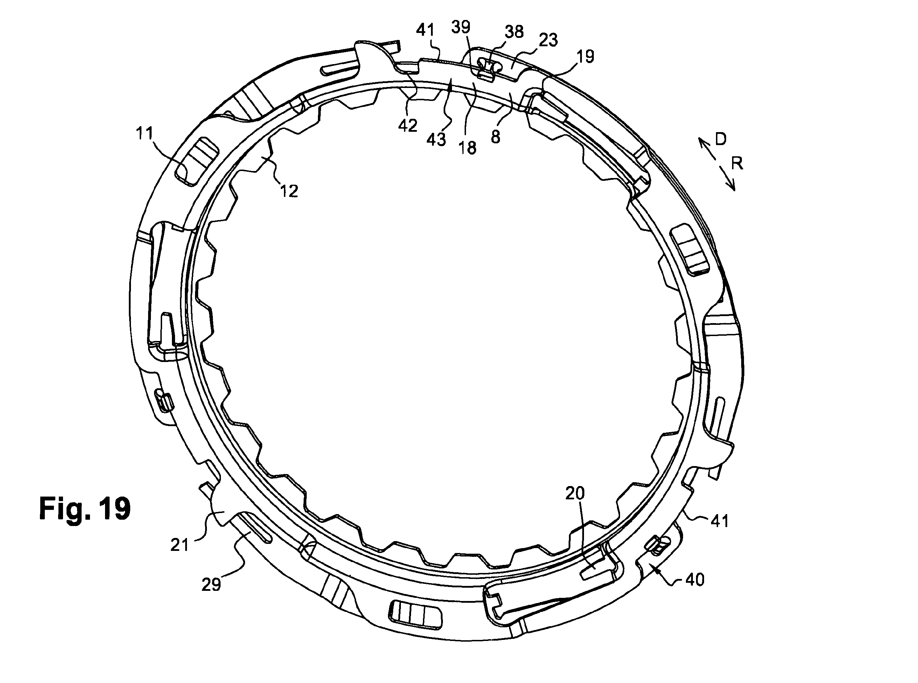

Dans cette forme de réalisation, les secondes zones 26 de l'élément de verrouillage 23 comportent des pattes 38 formées par découpage et pliage. Chaque patte 38 comporte une extrémité libre 39 s'étendant radialement vers l'intérieur et écartée axialement de la face avant 40 (figures 18 et 19) de la seconde zone 26 correspondante.

Chaque patte 38 et ladite face avant 40 de la seconde zone 26 correspondante délimitent une gorge dans laquelle est engagée une partie 41 du bord périphérique externe de l'élément de rattrapage de jeu 8.

L'élément de rattrapage de jeu 8 comporte des évidements 42 situés chacun directement en amont de ladite partie 41 correspondante dans le sens rétro R, et permettant le passage de l'extrémité libre 39 de la patte 38 correspondante, de l'arrière vers l'avant, au-delà de la face avant 43 de la seconde zone 18 correspondante de l'élément de rattrapage de jeu 8.

Les deux éléments 8, 23 peuvent ainsi être immobilisés axialement l'un par rapport à l'autre par un système de type baïonnette, tout en permettant la rotation relative entre ces deux éléments 8, 23.

Le montage d'un tel ensemble de transmission de couple peut par exemple comporter les étapes successives consistant à :
- assembler l'élément de verrouillage 23 et l'élément de rattrapage de jeu 8 à l'aide des moyens complémentaires 38, 39, 42, 41 précités,
- positionner l'élément de verrouillage 23 par rapport à l'élément de rattrapage de jeu 8 de façon à pouvoir engager les ressorts de rappel 14 entre lesdits éléments 8, 23,
- monter les moyens élastiques de rappel 14 entre l'élément de verrouillage 23 et l'élément de rattrapage de jeu 8,
- monter le sous-ensemble 8, 23, 14 formé précédemment sur l'organe mené 2,
- positionner l'élément de verrouillage 23 par rapport à l'élément de rattrapage de jeu 8 de façon à pouvoir verrouiller l'élément de verrouillage 23, en comprimant les ressorts de rappel 14,
- verrouiller l'élément de verrouillage 23.

En variante, les ressorts de rappel 14 peuvent être montés après que le sous-ensemble formé par assemblage des éléments 8, 23 a été monté sur l'organe mené 2.

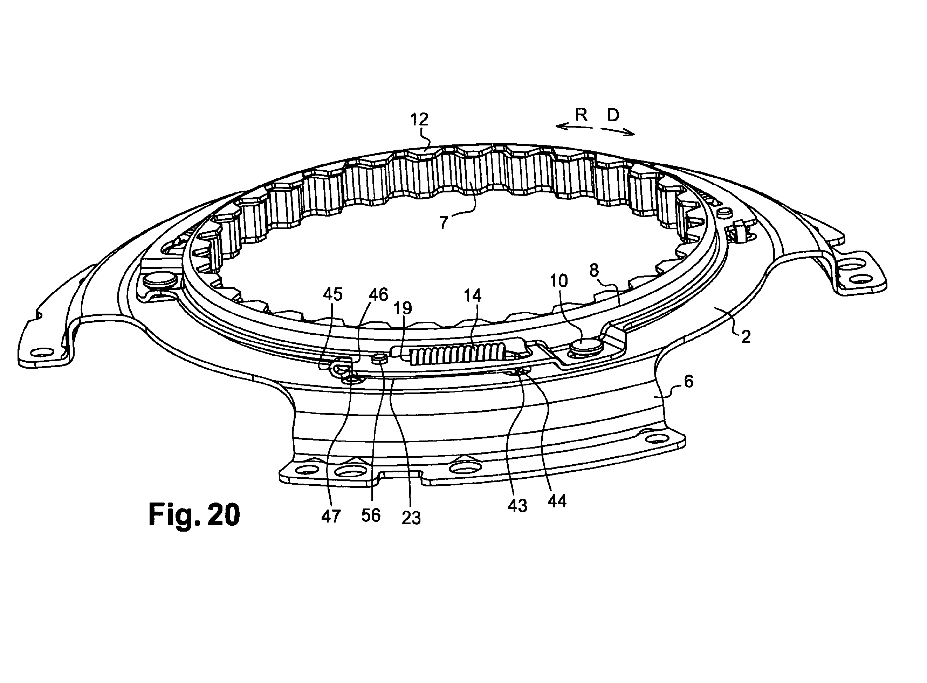

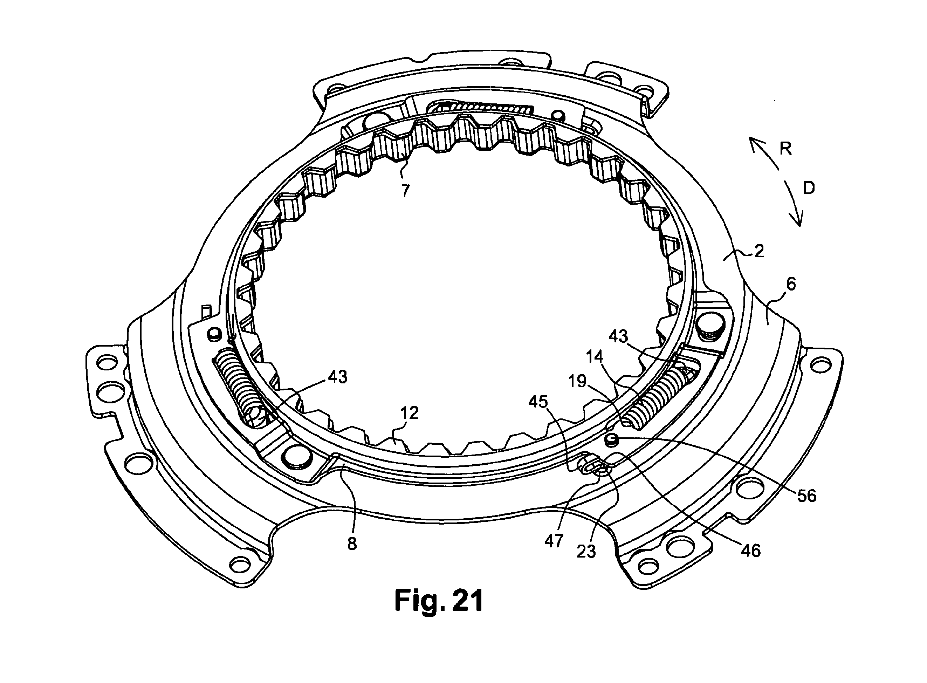

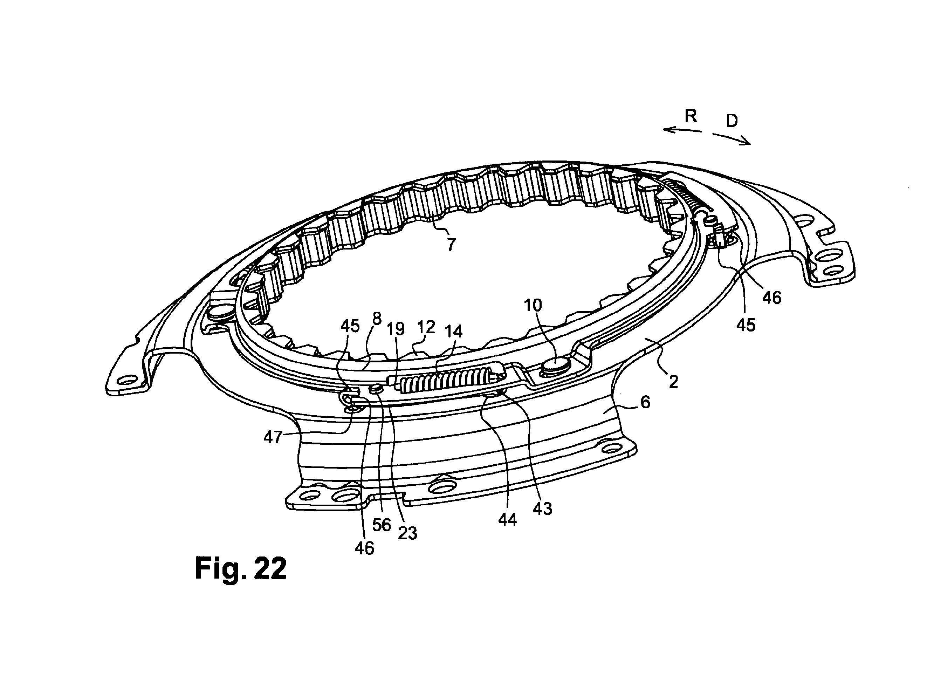

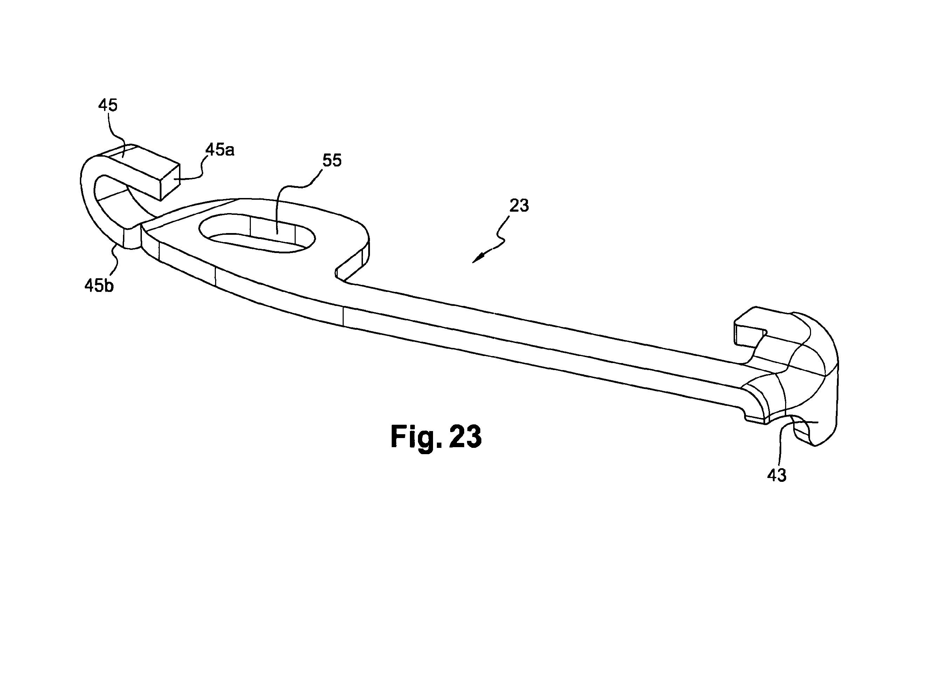

Les figures 20 à 23 illustrent une troisième forme de réalisation dans laquelle l'ensemble comporte plusieurs éléments de verrouillage 23, par exemple au nombre de trois. Chaque élément de verrouillage 23 (figure 23) comporte une première extrémité 43 recourbée vers l'avant et engagée dans une ouverture 44 de l'organe mené 2. Chaque élément de verrouillage 23 comporte en outre une seconde extrémité recourbée à la manière d'un crochet 45 dans un plan globalement parallèle à la face arrière de l'élément de rattrapage de jeu 8. L'extrémité libre 45a de chaque crochet 45 est destinée à prendre appui contre une face radiale 46 de l'élément de rattrapage de jeu 8 dans une position verrouillée. La zone courbe 45b de chaque crochet 45 est destinée à former une rampe ou surface de came, en appui sur un bossage 47 de l'élément mené 2 formant une contre-rampe ou surface de came complémentaire.

Chaque élément de verrouillage 23 comporte en outre un trou oblong 55 dans lequel est engagé un rivet 56 fixé dans des trous de l'organe de rattrapage de jeu 8. Ce rivet 56 sert au maintien axial de l'élément de verrouillage 23 et permet à ce dernier de coulisser sur l'axe de ce rivet 56.

Dans un cas de fonctionnement en sens rétro R, l'élément de rattrapage de jeu 8 et les éléments de verrouillage 23 sont entraînés dans le sens rétro R par rapport à l'organe mené 2. Lors de ce déplacement, les bossages 47 de l'organe mené repoussent axialement les crochets 45 vers l'arrière, de sorte que les extrémités libres de ces derniers soient écartées des faces d'appui 46 de l'élément de rattrapage de jeu 8 : les éléments de verrouillage 23 sont en position déverrouillée. A partir de cet instant, l'élément de rattrapage de jeu 8 peut être déplacé en position active par les ressorts de rappel 14. Parallèlement, la première extrémité 43 de chaque élément de verrouillage 23 peut également prendre appui sur le bord de l'ouverture correspondante 44 de l'organe mené 2. Comme précédemment, dans les cas de fonctionnement ultérieurs, aussi bien dans le sens rétro R que dans le sens direct D, l'élément de rattrapage de jeu 8 reste dans sa position active et les éléments de verrouillage 23 restent dans leur position déverrouillée.

Le montage d'un tel ensemble comporte par exemple les étapes successives suivantes :
- monter les éléments de verrouillage 23 sur l'élément de rattrapage de jeu 8,
- monter les rivets 56,
- monter les ressorts de rappel 14 entre les éléments de verrouillage 23 et l'élément de rattrapage de jeu 8,
- positionner les éléments de verrouillage 23 par rapport à l'élément de rattrapage de jeu 8 de façon à pouvoir verrouiller chaque élément de verrouillage 23, en contraignant les ressorts de rappel 14,
- verrouiller chaque élément de verrouillage 23 en positionnant l'extrémité de chaque crochet 45 en appui contre la face radiale 46 correspondante.
- monter le sous-ensemble formé des éléments 8, 23, 14 sur l'organe mené 2,
- monter les rivets 10.

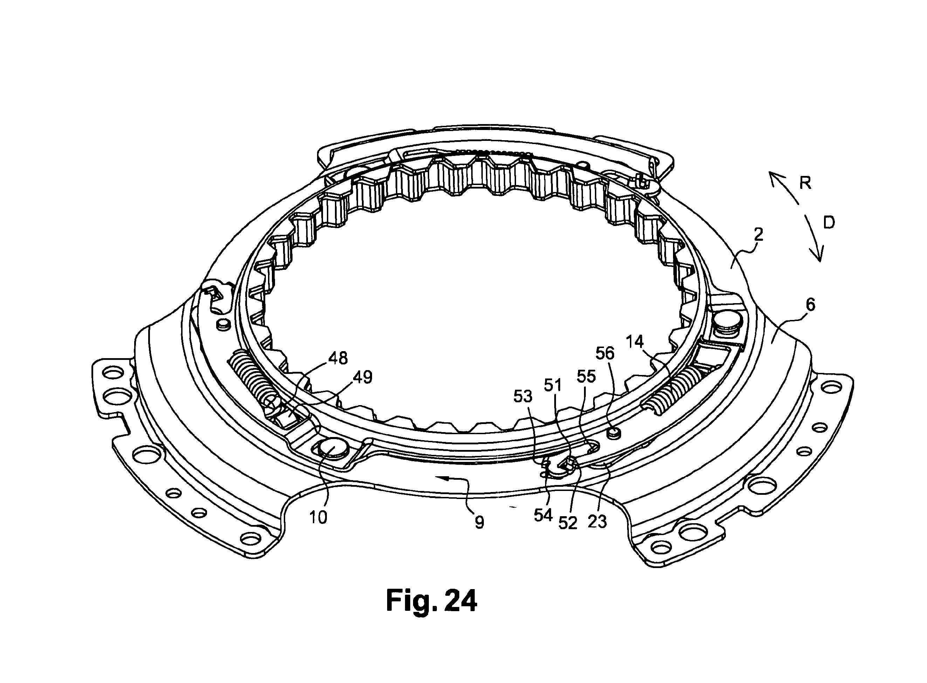

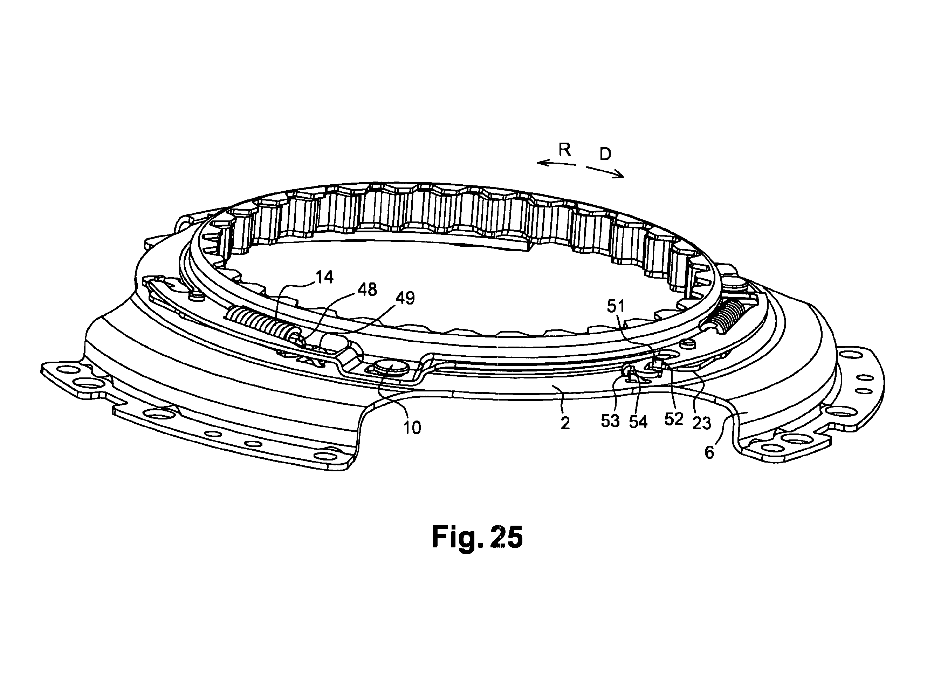

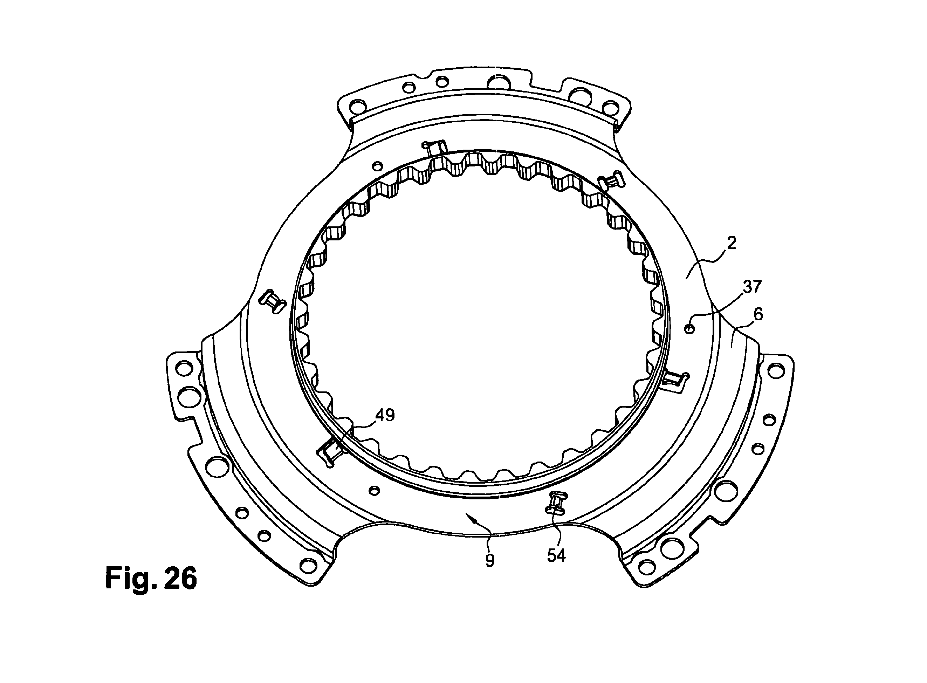

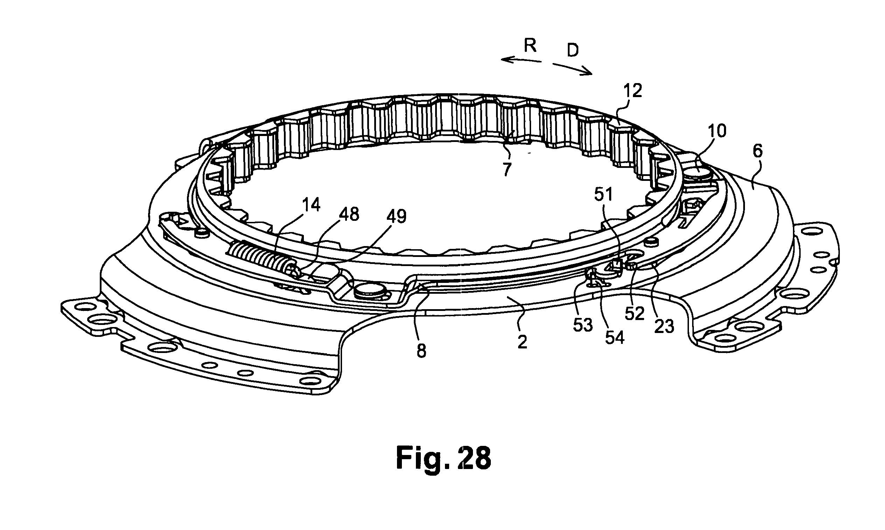

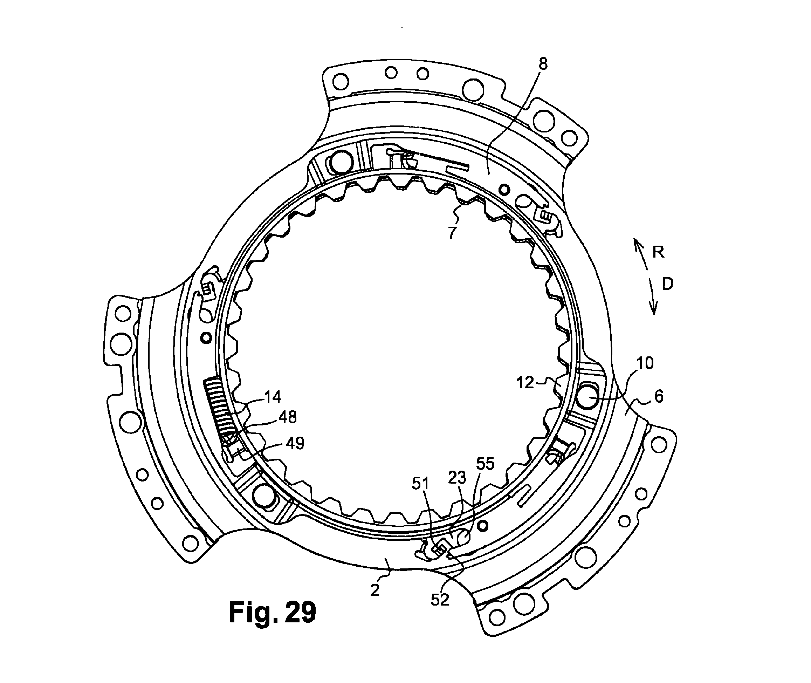

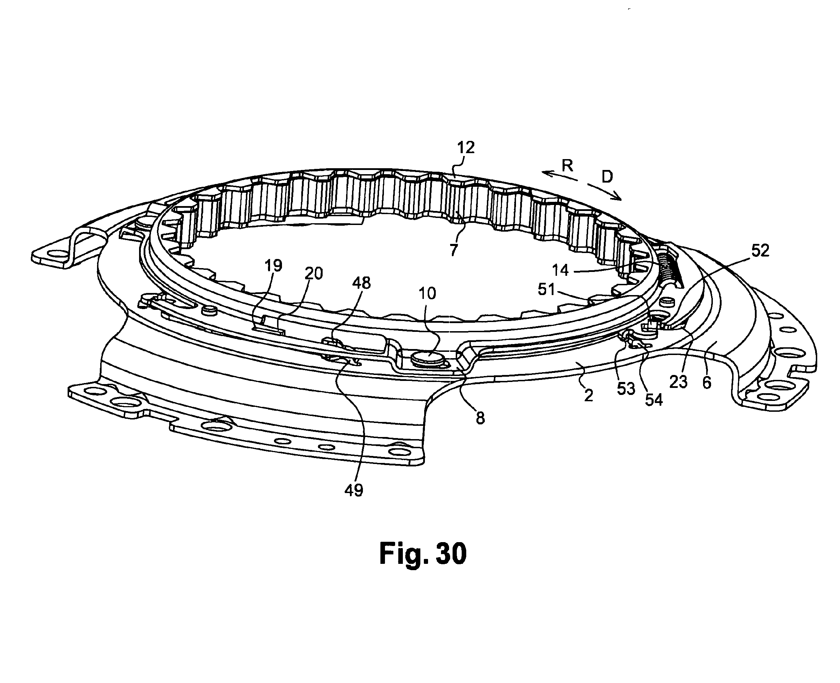

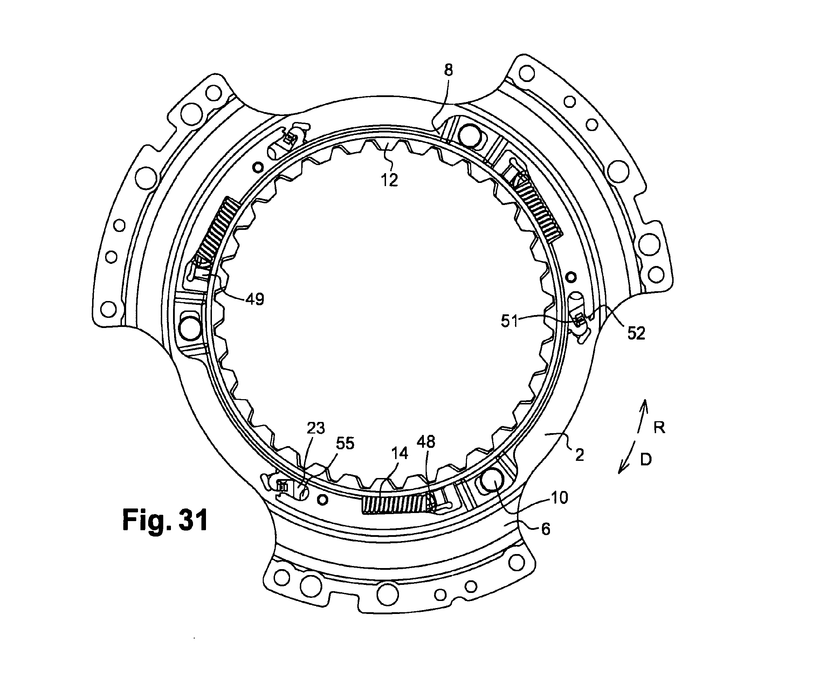

Les figures 24 à 31 illustrent une quatrième forme de réalisation dans laquelle l'ensemble comporte plusieurs éléments de verrouillage 23, par exemple au nombre de trois.

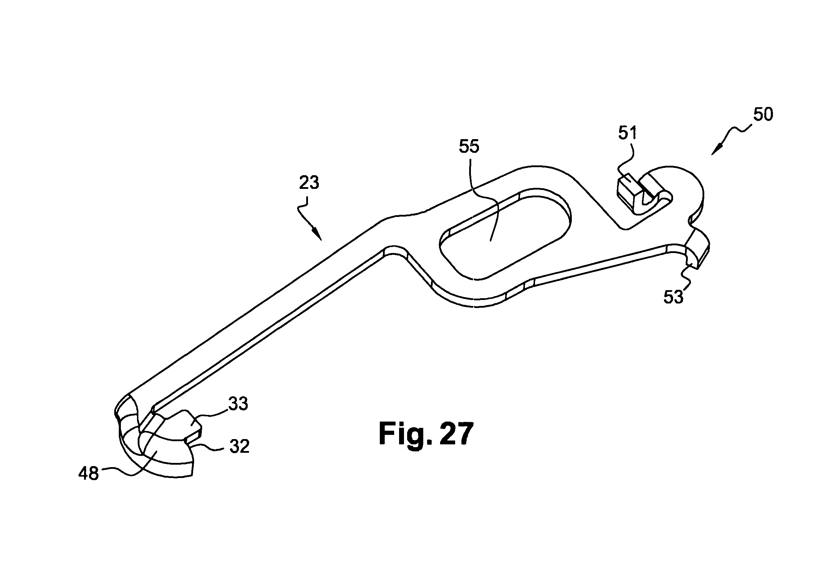

Comme cela est mieux visible à la figure 27, chaque élément de verrouillage 23 comporte une première extrémité 48 comprenant une face d'appui 32 du ressort de rappel 14 correspondant, pourvue d'un plot de centrage 33 dudit ressort 14. La première extrémité 48 forme en outre une zone bombée destinée à venir en appui contre une butée de forme correspondante de l'organe mené 2. Chacune de ces butées est formée par l'extrémité libre d'une patte 49 (ou bossage) faisant saillie axialement de la face arrière 9 de l'organe mené 2.

La seconde extrémité 50 (figure 27) de chaque élément de verrouillage 23 comporte une première patte 51 repliée axialement vers l'arrière et destinée à venir s'engager dans une encoche 52 de l'élément de rattrapage de jeu 8 en position verrouillée, et une seconde patte 53 repliée axialement vers l'avant et destinée à coopérer avec une came 54 de l'organe mené 2. Chaque came est formée par une languette 54 en saillie depuis la face arrière 9 de l'élément mené 2. Comme précédemment, chaque élément de verrouillage 23 comporte en outre un trou oblong 55 dans lequel est engagé un rivet 56 fixé dans des trous de l'organe de rattrapage de jeu 8.

Dans un cas de fonctionnement en sens rétro R, l'élément de rattrapage de jeu 8 et les éléments de verrouillage 23 sont entraînés dans le sens rétro R par rapport à l'organe mené 2. Lors de ce déplacement, la coopération des pattes 53 et des languettes 54 entraîne le basculement de chaque élément de verrouillage 23, de sorte que chaque patte 51 soit dégagée de l'encoche 52 de l'élément de rattrapage de jeu 8 : les éléments de verrouillage 23 sont en position déverrouillée. A partir de cet instant, l'élément de rattrapage de jeu 8 peut être déplacé en position active par les ressorts de rappel 14. Parallèlement, la première extrémité 48 de chaque élément de verrouillage 23 peut également prendre appui sur l'extrémité libre des pattes 49. Comme précédemment, dans les cas de fonctionnement ultérieurs, aussi bien dans le sens rétro R que dans le sens direct D, l'élément de rattrapage de jeu 8 reste dans sa position active et les éléments de verrouillage 23 restent dans leur position déverrouillée.

Le montage d'un tel ensemble comporte par exemple les étapes successives suivantes :
- monter les éléments de verrouillage 23 sur l'élément de rattrapage de jeu 8,
- monter les rivets 56,
- positionner l'élément de rattrapage de jeu 8 par rapport aux éléments de verrouillage 23 de façon à pouvoir engager les ressorts de rappel 14 entre lesdits éléments 8, 23,
- monter les ressorts de rappel 14 entre les éléments de verrouillage 23 et l'élément de rattrapage de jeu 8,
- positionner les éléments de verrouillage 23 par rapport à l'élément de rattrapage de jeu 8 de façon à pouvoir verrouiller chaque élément de verrouillage 23, en contraignant les moyens élastiques de rappel 14,
- verrouiller chaque élément de verrouillage 23 en positionnant les pattes 51 dans les encoches 52 correspondantes.
- monter le sous-ensemble formé des éléments 8, 23, 14 sur l'organe mené 2,
- monter les rivets 10.

## Revendications

1. Ensemble de transmission de couple, en particulier pour véhicule automobile, comprenant
- un organe menant (1) comportant des cannelures (3),
- un organe mené (2) comportant des cannelures complémentaires (7), les cannelures (3) dudit organe menant (1) étant engagées avec jeu dans les cannelures complémentaires dudit organe mené,
- un élément de rattrapage de jeu (8) monté déplaçable sur l'organe mené (2) ou sur l'organe menant (1), entre une première position dans laquelle il n'exerce aucune contrainte sur l'organe mené (2) ou sur l'organe menant (1) et une seconde position dans laquelle il contraint les cannelures (3, 7) de l'un desdits organes (1, 2) contre les cannelures (7, 3) de l'autre organe (1, 2),
- des moyens élastiques de rappel (14) sollicitant l'élément de rattrapage de jeu (8) vers sa seconde position, et
- des moyens de verrouillage (23) mobiles entre une position de verrouillage, dans laquelle ils immobilisent l'élément de rattrapage de jeu (8) dans sa première position, et une position de déverrouillage dans laquelle ils libèrent l'élément de rattrapage de jeu (8) qui peut alors se déplacer vers sa seconde position, les moyens de verrouillage (23) étant aptes à être déplacés vers leur position de déverrouillage par rotation relative de l'organe menant (1) par rapport à l'organe mené (2) dans un cas d'entraînement de l'organe menant (1) par l'organe mené (2), **caractérisé en ce que**
- les moyens de verrouillage comportent un élément de verrouillage (23) distinct de l'élément de rattrapage de jeu (8) et mobile par rapport à celui-ci, les moyens élastiques de rappel (14) étant montés entre l'élément de verrouillage (23) et l'élément de rattrapage de jeu (8), le déverrouillage de l'élément de verrouillage (23) étant obtenu par déplacement relatif entre l'élément de verrouillage (23) et l'élément de rattrapage de jeu (8).

2. Ensemble selon la revendication 1, **caractérisé en ce que** l'élément de rattrapage de jeu (8) et l'élément de verrouillage (23) sont mobiles en rotation par rapport à l'organe mené (2), l'élément de rattrapage de jeu (8) étant apte à être entraîné en rotation par rapport à l'organe mené (2), dans un sens dit rétro (R) et sur une plage angulaire P1, dans un cas d'entraînement de l'organe menant (1) par l'organe mené (2), de façon à entraîner également la rotation de l'élément de verrouillage (23) dans le sens rétro (R), par l'intermédiaire des organes élastiques (14), l'organe mené (2) comportant une butée (10) apte à limiter à une plage angulaire P2 la rotation de l'élément de verrouillage (23) dans le sens rétro (R), la plage angulaire P2 étant inférieure à la plage angulaire P1 de sorte que, une fois que l'élément de verrouillage (23) est immobilisé dans le sens rétro (R) par ladite butée (10), l'élément de rattrapage de jeu (8) peut encore pivoter dans le sens rétro (R) par rapport à l'élément de verrouillage (23) et déverrouiller ainsi l'élément de verrouillage (23).

3. Ensemble selon la revendication 1 ou 2, **caractérisé en ce que** l'élément de verrouillage (23) comporte au moins une languette élastique (29) dont l'extrémité libre (30) est apte à venir en appui contre une butée (21, 22) de l'organe de rattrapage de jeu (8) dans la position de verrouillage, ladite languette (29) étant dégagée élastiquement de ladite butée (21, 22) dans la position de déverrouillage de manière à autoriser le déplacement de l'élément de rattrapage de jeu (8) sous l'effet des moyens élastiques de rappel (14).

4. Ensemble selon l'une des revendications 1 à 3, **caractérisé en ce que** l'élément de rattrapage de jeu (8) comporte des dents (12) aptes à venir en appui contre les cannelures (3) de l'organe menant (1) ou de l'organe mené (2) dans la seconde position de l'élément de rattrapage de jeu (8) ou en cas d'entraînement de l'organe menant (1) par l'organe mené (2).

5. Ensemble selon l'une des revendications 1 à 4, **caractérisé en ce que** l'élément de verrouillage (23) est monté sur l'organe mené (2) par l'intermédiaire d'au moins un rivet (10) engagé dans une ouverture oblongue (25) de l'élément de verrouillage (23), l'appui du rivet (10) sur l'une (25b) des extrémités (25a, 25b) de ladite ouverture (25) formant la butée permettant de limiter la rotation de l'élément de verrouillage (23) dans le sens rétro (R).

6. Ensemble selon la revendication 5, **caractérisé en ce que** ledit rivet (10) sert également au montage de l'élément de rattrapage de jeu (8) sur l'organe mené (2).

7. Ensemble selon l'une des revendications 1 à 6, **caractérisé en ce que** l'élément de verrouillage (23) et l'élément de rattrapage de jeu (8) sont annulaires et comportent des moyens complémentaires (38, 39, 42, 41) permettant d'immobiliser axialement l'élément de verrouillage (23) par rapport à l'élément de rattrapage de jeu (8) tout en autorisant leur rotation relative.

8. Ensemble selon la revendication 7, **caractérisé en ce que** l'élément de verrouillage (23), respectivement l'élément de rattrapage de jeu (8), comporte au moins une gorge dans laquelle est engagé un bord périphérique interne ou externe (41) de l'élément de rattrapage de jeu (8), respectivement de l'élément de verrouillage (23).

9. Ensemble selon la revendication 8, **caractérisé en ce que** la gorge est délimitée par une paroi radiale (40) de l'élément de verrouillage (23), respectivement par une paroi radiale de l'élément de rattrapage de jeu (8), et par une patte (38).

10. Ensemble selon la revendication 1 ou 2, **caractérisé en ce que** l'élément de verrouillage (23) comporte une surface de came (45, 53) apte à coopérer avec une surface de came complémentaire (47, 54) de l'organe mené (2), l'élément de verrouillage (23) comportant une butée (45, 51) apte à venir en appui sur une surface d'appui (46, 52) de l'élément de rattrapage de jeu (8) dans sa position verrouillée et apte à être décalée de ladite surface d'appui (46, 52) dans sa position déverrouillée, l'élément de verrouillage (23) étant apte à passer de sa position verrouillée à sa position déverrouillée par coopération desdites surfaces de cames (45, 53 ; 47, 54).

11. Ensemble selon la revendication 10, **caractérisé en ce que** l'élément de verrouillage (23) comporte une zone d'appui (43, 48) destinée à venir en appui (44, 49) contre l'organe mené (2) après déverrouillage.

12. Ensemble selon la revendication 10 ou 11, **caractérisé en ce que** les surfaces de came (45, 47) de l'élément de verrouillage (23) et de l'élément de rattrapage de jeu (8) sont conçues pour décaler axialement la butée (45) de l'élément de verrouillage (23) par rapport à la surface d'appui correspondante (46) de l'élément de rattrapage de jeu (8), de façon à déverrouiller l'élément de verrouillage (23).

13. Ensemble selon la revendication 10 ou 11, **caractérisé en ce que** les surfaces de came (53, 54) de l'élément de verrouillage (23) et de l'élément de rattrapage de jeu (8) sont conçues pour décaler axialement la butée (51) de l'élément de verrouillage (23) par rapport à la surface d'appui correspondante (52) de l'élément de rattrapage de jeu (8), de façon à déverrouiller l'élément de verrouillage (23).

14. Ensemble selon l'une des revendications 10 à 13, **caractérisé en ce que** l'élément de verrouillage (23) est monté basculant par rapport à l'élément de rattrapage de jeu (8), entre une position verrouillée et une position déverrouillée, les surfaces de came (45, 53 ; 47, 54) desdits éléments (8, 23) étant aptes à entraîner le basculement de l'élément de verrouillage (23) vers sa position de déverrouillage.

15. Ensemble selon la revendication 14, **caractérisé en ce que** l'élément de verrouillage (23) comporte un trou oblong (55) dans lequel est monté un plot (56) de l'élément de rattrapage de jeu (8).

16. Ensemble selon l'une des revendications 1 à 15, **caractérisé en ce que** l'organe menant (1) est une partie d'un double volant amortisseur et l'organe mené (2) est une partie d'un embrayage.

17. Procédé de montage d'un ensemble selon l'une des revendications 1 à 6, **caractérisé en ce qu'il** comporte les étapes consistant à :
- monter l'élément de rattrapage de jeu (8) sur l'organe mené (2),
- monter l'élément de verrouillage (23) sur l'organe mené (2),
- positionner l'élément de verrouillage (23) par rapport à l'élément de rattrapage de jeu (8) de façon à pouvoir engager les moyens élastiques de rappel (14) entre lesdits éléments (8, 23),
- monter les moyens élastiques de rappel (14) entre l'élément de verrouillage (23) et l'élément de rattrapage de jeu (8),
- positionner l'élément de verrouillage (23) par rapport à l'élément de rattrapage de jeu (8) de façon à pouvoir verrouiller l'élément de verrouillage (23), en contraignant les moyens élastiques de rappel (14),
- verrouiller l'élément de verrouillage (23).

18. Procédé de montage d'un ensemble selon l'une des revendications 7 à 9, **caractérisé en ce qu'**il comporte les étapes consistant à :
- assembler l'élément de verrouillage (23) et l'élément de rattrapage de jeu (8) à l'aide des moyens complémentaires (38, 39, 42, 41) permettant d'immobiliser axialement l'élément de verrouillage (23) par rapport à l'élément de rattrapage de jeu (8) tout en autorisant leur rotation relative,
- positionner l'élément de verrouillage (23) par rapport à l'élément de rattrapage de jeu (8) de façon à pouvoir engager les moyens élastiques de rappel (14) entre lesdits éléments (8, 23),
- monter les moyens élastiques de rappel (14) entre l'élément de verrouillage (23) et l'élément de rattrapage de jeu (8),
- monter le sous-ensemble formé précédemment sur l'organe mené (2),
- positionner l'élément de verrouillage (23) par rapport à l'élément de rattrapage de jeu (8) de façon à pouvoir verrouiller l'élément de verrouillage (23), en contraignant les moyens élastiques de rappel (14),
- verrouiller l'élément de verrouillage (23).

19. Procédé selon la revendication 17 ou 18, **caractérisé en ce que** l'élément de verrouillage (23) est verrouillé en positionnant l'extrémité libre (30) de la languette élastique (29) en appui contre la butée (21, 22) correspondante de l'organe de rattrapage de jeu (8), à l'encontre de la force de rappel élastique de la languette (29), cette position de verrouillage de la languette élastique (29) étant maintenue par la contrainte exercée par les moyens élastiques de rappel (14).

20. Procédé de montage d'un ensemble selon l'une des revendications 10 à 16, **caractérisé en ce qu'il** comporte les étapes consistant à :
- monter l'élément de verrouillage (23) sur l'élément de rattrapage de jeu (8),
- positionner l'élément de rattrapage de jeu (8) par rapport à l'élément de verrouillage (23) de façon à pouvoir engager les moyens élastiques de rappel (14) entre lesdits éléments (8, 23),
- monter les moyens élastiques de rappel (14) entre l'élément de verrouillage (23) et l'élément de rattrapage de jeu (8),
- positionner l'élément de verrouillage (23) par rapport à l'élément de rattrapage de jeu (8) de façon à pouvoir verrouiller chaque élément de verrouillage (23), en contraignant les moyens élastiques de rappel (14),
- verrouiller l'élément de verrouillage (23),
- monter le sous-ensemble formé de l'élément de rattrapage de jeu (8), de l'élément de verrouillage (23) et des moyens élastiques de rappel (14) sur l'organe mené (2).

## Patentansprüche

1. Einheit zur Drehmomentübertragung, insbesondere für ein Kraftfahrzeug, umfassend:
- ein Antriebselement (1), umfassend Rillen (3),
- ein angetriebenes Element (2), umfassend komplementäre Rillen (7), wobei die Rillen (3) des Antriebselements (1) mit einem Spiel in den komplementären Rillen des angetriebenen Elements in Eingriff sind,
- ein Element (8) zur Spielnachstellung, das auf dem angetriebenen Element (2) oder auf dem Antriebselement (1) zwischen einer ersten Position, in der es keinen Druck auf das angetriebene Element (2) oder das Antriebselement (1) ausübt, und einer zweiten Position, in der es die Rillen (3, 7) eines der Elemente (1, 2) gegen die Rillen (7, 3) des anderen Elements (1, 2) drückt,
- elastische Rückstellmittel (14), die das Element zur Spielnachstellung (8) in seine zweite Position drücken, und
- Verriegelungsmittel (23), die zwischen einer Verriegelungsposition, in der sie das Element zur Spielnachstellung (8) in seiner ersten Position feststellen, und einer Entriegelungsposition, in der sie das Element zur Spielnachstellung (8) freigeben, das sich nun in seine zweite Position verschieben kann, beweglich sind, wobei die Verriegelungsmittel (23) geeignet sind, in ihre Entriegelungsposition durch relative Drehung des Antriebselements (1) in Bezug zum angetriebenen Element (2) in einem Fall des Antriebs des Antriebselements (1) durch das angetriebene Element (2) verschoben zu werden, **dadurch gekennzeichnet, dass**:
- die Verriegelungsmittel ein Verriegelungselement (23) umfassen, das sich von dem Element zur Spielnachstellung (8) unterscheidet und in Bezug zu diesem beweglich ist, wobei die elastischen Rückstellmittel (14) zwischen dem Verriegelungselement (23) und dem Element zur Spielnachstellung (8) montiert sind, wobei die Entriegelung des Verriegelungselements (23) durch relative Verschiebung zwischen dem Verriegelungselement (23) und dem Element zur Spielnachstellung (8) erhalten wird.

2. Einheit nach Anspruch 1, **dadurch gekennzeichnet, dass** das Element zur Spielnachstellung (8) und das Verriegelungselement (23) in Bezug zum angetriebenen Element (2) drehbeweglich sind, wobei das Element zur Spielnachstellung (8) geeignet ist, in Drehung in Bezug zum angetriebenen Element (2) in eine so genannte Rückwärtsrichtung (R) und auf einem Winkelbereich P1 in einem Fall des Antriebs des Antriebselements (1) durch das angetriebene Element (2) angetrieben zu werden, um auch die Drehung des Verriegelungselements (23) in die Rückwärtsrichtung (R) mit Hilfe der elastischen Elemente (14) anzutreiben, wobei das angetriebene Element (2) einen Anschlag (10) umfasst, der geeignet ist, die Drehung des Verriegelungselements (23) in die Rückwärtsrichtung (R) auf einen Winkelbereich P2 zu begrenzen, wobei der Winkelbereich P2 kleiner als der Winkelbereich P1 ist, so dass, wenn das Verriegelungselement (23) in die Rückwärtsrichtung (R) durch den Anschlag (10) festgestellt ist, das Element zur Spielnachstellung (8) noch in die Rückwärtsrichtung (R) in Bezug zum Verriegelungselement (23) schwenken und so das Verriegelungselement (23) entriegeln kann.

3. Einheit nach Anspruch 1 oder 2, **dadurch gekennzeichnet, dass** das Verriegelungselement (23) mindestens eine elastische Zunge (29) umfasst, deren freies Ende (30) geeignet ist, an einem Anschlag (21, 22) des Elements zur Spielnachstellung (8) in der Verriegelungsposition zur Anlage zu gelangen, wobei die Zuge(29) elastisch von dem Anschlag (21, 22) in der Entriegelungsposition gelöst wird, um die Verschiebung des Elements zur Spielnachstellung (8) unter der Wirkung der elastischen Rückstellmittel (14) zu gestatten.

4. Einheit nach einem der Ansprüche 1 bis 3, **dadurch gekennzeichnet, dass** das Element zur Spielnachstellung (8) Zähne (12) umfasst, die geeignet sind, an den Rillen (3) des Antriebselements (1) oder des angetriebenen Elements (2) in der zweiten Position des Elements zur Spielnachstellung (8) oder im Falle eines Antriebs des Antriebselements (1) durch das angetriebene Element (2) zur Anlage zu gelangen.

5. Einheit nach einem der Ansprüche 1 bis 4, **dadurch gekennzeichnet, dass** das Verriegelungselement (23) auf dem angetriebenen Element (2) mit Hilfe mindestens eines Niets (10) montiert ist, der in eine Langöffnung (25) des Verriegelungselements (23) eingreift, wobei die Auflage des Niets (10) auf einem (25b) der Enden (25a, 25b) der Öffnung (25) den Anschlag bildet, der es ermöglicht, die Drehung des Verriegelungselements (23) in die Rückwärtsrichtung (R) zu begrenzen.

6. Einheit nach Anspruch 5, **dadurch gekennzeichnet dass** der Niet (10) auch zur Montage des Elements zur Spielnachstellung (8) auf dem angetriebenen Element (2) dient.

7. Einheit nach einem der Ansprüche 1 bis 6, **dadurch gekennzeichnet, dass** das Verriegelungselement (23) und das Element zur Spielnachstellung (8) ringförmig sind und komplementäre Mittel (38, 39, 42, 41) umfassen, die es ermöglichen, das Verriegelungselement (23) axial in Bezug zum Element zur Spielnachstellung (8) festzustellen, wobei ihre relative Drehung gestattet ist.

8. Einheit nach Anspruch 7, **dadurch gekennzeichnet, dass** das Verriegelungselement (23) bzw. das Element zur Spielnachstellung (8) mindestens eine Rille umfasst, in die ein innerer oder äußerer Umfangsrand (41) des Elements zur Spielnachstellung (8) bzw. des Verriegelungselements (23) eingreift.

9. Einheit nach Anspruch 8, **dadurch gekennzeichnet, dass** die Rille durch eine radiale Wand (40) des Verriegelungselements (23) bzw. durch eine radiale Wand des Elements zur Spielnachstellung (8) und durch eine Lasche (38) begrenzt ist.

10. Einheit nach Anspruch 1 oder 2, **dadurch gekennzeichnet, dass** das Verriegelungselement (23) eine Nockenfläche (45, 53) umfasst, die geeignet ist, mit einer komplementären Nockenfläche (47, 54) des angetriebenen Elements (2) zusammenzuwirken, wobei das Verriegelungselement (23) einen Anschlag (45, 51) umfasst, der geeignet ist, auf einer Stützfläche (46, 52) des Elements zur Spielnachstellung (8) in seiner verriegelten Position zur Anlage zu gelangen, und der geeignet ist, zu der Stützfläche (46, 52) in seiner entriegelten Position versetzt zu werden, wobei das Verriegelungselement (23) geeignet ist, von seiner Verriegelungsposition in seine Entriegelungsposition durch Zusammenwirken der Nockenflächen (45, 53; 47, 54) überzugehen.

11. Einheit nach Anspruch 10, **dadurch gekennzeichnet, dass** das Verriegelungselement (23) eine Stützzone (43, 48) umfasst, die dazu bestimmt ist, an dem angetriebenen Element (2) nach dem Entriegeln zur Anlage (44, 49) zu gelangen.

12. Einheit nach Anspruch 10 oder 11, **dadurch gekennzeichnet, dass** die Nockenflächen (45, 47) des Verriegelungselements (23) und des Elements zur Spielnachstellung (8) derart ausgeführt sind, dass sie den Anschlag (45) des Verriegelungselements (23) axial in Bezug zu der entsprechenden Stützfläche (46) des Elements zur Spielnachstellung (8) versetzen, um das Verriegelungselement (23) zu entriegeln.

13. Einheit nach Anspruch 10 oder 11, **dadurch gekennzeichnet, dass** die Nockenflächen (53, 54) des Verriegelungselements (23) und des Elements zur Spielnachstellung (8) derart ausgeführt sind, dass sie den Anschlag (51) des Verriegelungselements (23) axial in Bezug zu der entsprechenden Stützfläche (52) des Elements zur Spielnachstellung (8) versetzen, um das Verriegelungselement (23) zu entriegeln.

14. Einheit nach einem der Ansprüche 10 bis 13, **dadurch gekennzeichnet, dass** das Verriegelungselement (23) schwenkbar in Bezug zu dem Element zur Spielnachstellung (8) zwischen einer verriegelten Position und einer entriegelten Position montiert ist, wobei die Nockenflächen (45, 53; 47, 54) der Elemente (8, 23) geeignet sind, das Schwenken des Verriegelungselements (23) in seine Entriegelungsposition anzutreiben.

15. Einheit nach Anspruch 14, **dadurch gekennzeichnet, dass** das Verriegelungselement (23) ein Langloch (55) umfasst, in dem ein Bolzen (56) des Elements zur Spielnachstellung (8) montiert ist.

16. Einheit nach einem der Ansprüche 1 bis 15, **dadurch gekennzeichnet, dass** das Antriebselement (1) ein Teil eines Zweimassen-Dämpfungsschwungrades und das angetriebene Element (2) ein Teil einer Kupplung ist.

17. Verfahren zur Montage einer Einheit nach einem der Ansprüche 1 bis 6, **dadurch gekennzeichnet, dass** es die folgenden Schritte umfasst, darin bestehend:
- das Element zur Spielnachstellung (8) auf dem angetriebenen Element (2) zu montieren,
- das Verriegelungselement (23) auf dem angetriebenen Element (2) zu montieren,
- das Verriegelungselement (23) in Bezug zu dem Element zur Spielnachstellung (8) derart zu positionieren, dass die elastischen Rückstellmittel (14) zwischen den Elementen (8, 23) eingreifen können,
- die elastischen Rückstellmittel (14) zwischen dem Verriegelungselement (23) und dem Element zur Spielnachstellung (8) zu montieren,
- das Verriegelungselement (23) in Bezug zum Element zur Spielnachstellung (8) derart zu positionieren, dass das Verriegelungselement (23) verriegelt werden kann, wobei die elastischen Rückstellmittel (14) gespannt werden,
- das Verriegelungselement (23) zu verriegeln.

18. Verfahren zur Montage einer Einheit nach einem der Ansprüche 7 bis 9, **dadurch gekennzeichnet, dass** es die folgenden Schritte umfasst, darin bestehend:
- das Verriegelungselement (23) und das Element zur Spielnachstellung (8) mit Hilfe der komplementären Mittel (38, 39, 42, 41) zusammenzufügen, die es ermöglichen, das Verriegelungselement (23) axial in Bezug zum Element zur Spielnachstellung (8) festzustellen, wobei ihre relative Drehung gestattet ist,
- das Verriegelungselement (23) in Bezug zum Element zur Spielnachstellung (8) derart positionieren, dass die elastischen Rückstellmittel (14) zwischen den Elementen (8, 23) eingreifen können,
- die elastischen Rückstellmittel (14) zwischen dem Verriegelungselement (23) und dem Element zur Spielnachstellung (8) zu montieren,
- die vorher auf dem angetriebenen Element (2) gebildete Untereinheit zu montieren,
- das Verriegelungselement (23) in Bezug zu dem Element zur Spielnachstellung (8) derart zu positionieren, dass das Verriegelungselement (23) verriegelt werden kann, wobei die elastischen Rückstellmittel (14) gespannt werden,
- das Verriegelungselement (23) zu verriegeln.

19. Verfahren nach Anspruch 17 oder 18, **dadurch gekennzeichnet, dass** das Verriegelungselement (23) verriegelt wird, wobei das freie Ende (30) der elastischen Zunge (29) am entsprechenden Anschlag (21, 22) des Elements zur Spielnachstellung (8) gegen die elastische Rückstellkraft der Zunge (29) anliegend positioniert wird, wobei diese Verriegelungsposition der elastischen Zunge (29) durch die Spannung, die von den elastischen Rückstellmitteln (14) ausgeübt wird, beibehalten wird.

20. Verfahren zur Montage einer Einheit nach einem der Ansprüche 10 bis 16, **dadurch gekennzeichnet, dass** es die folgenden Schritte umfasst, darin bestehend:
- das Verriegelungselement (23) auf dem Element zur Spielnachstellung (8) zu montieren,
- das Element zur Spielnachstellung (8) in Bezug zum Verriegelungselement (23) derart zu positionieren, dass die elastischen Mittel (14) zwischen den Elementen (8, 23) eingreifen können,
- die elastischen Rückstellmittel (14) zwischen dem Verriegelungselement (23) und dem Element zur Spielnachstellung (8) zu montieren,
- das Verriegelungselement (23) in Bezug zum Element zur Spielnachstellung (8) derart zu positionieren, dass jedes Verriegelungselement (23) verriegelt werden kann, wobei die elastischen Rückstellmittel (14) gespannt werden,
- das Verriegelungselement (23) zu verriegeln,
- die Untereinheit, die von dem Element zur Spielnachstellung (8), dem Verriegelungselement (23) und den elastischen Rückstellmitteln (14) gebildet ist, auf dem angetriebenen Element (2) zu montieren.

## Claims

1. Torque transmission assembly, in particular for a motor vehicle, comprising
- a driving member (1) comprising splines (3),
- a driven member (2) comprising complementary splines (7), the splines (3) of the said driving member (1) being engaged with clearance in the complementary splines of the said driven member,
- a clearance compensation element (8) mounted movably on the driven member (2) or on the driving member (1) between a first position in which it exerts no stress on the driven member (2) or on the driving member (1) and a second position in which it forces the splines (3, 7) of one of the said members (1, 2) against the splines (7, 3) of the other member (1, 2),
- elastic return means (14) urging the clearance compensation element (8) towards its second position, and
- locking means (23) movable between a locking position in which they immobilize the clearance compensation element (8) in its first position, and an unlocking position in which they release the clearance compensation element (8), which can then move towards its second position, the locking means (23) being able to be moved towards their locking position by relative rotation of the driving member (1) with respect to the driven member (2) in a case of the driving member (1) being driven by the driven member (2), **characterized in that**
- the locking means comprise a locking element (23) separate from the clearance compensation element (8) and movable with respect to the latter, the elastic return means (14) being mounted between the locking element (23) and the clearance compensation element (8), unlocking of the locking element (23) being obtained by relative movement between the locking element (23) and the clearance compensation element (8).

2. Assembly according to Claim 1, **characterized in that** the clearance compensation element (8) and the locking element (23) are rotationally movable with respect to the driven member (2), the clearance compensation element (8) being able to be rotated with respect to the driven member (2), in a reverse direction (R) and over an angular range P1, in a case of the driving member (1) being driven by the driven member (2), so as also to rotate the locking element (23) in the reverse direction (R) via the elastic members (14), the driven member (2) comprising a stop (10) able to limit the rotation of the locking element (23) in the reverse direction (R) to an angular range P2, the angular range P2 being less than the angular range P1 such that, once the locking element (23) is immobilized in the reverse direction (R) by the said stop (10), the clearance compensation element (8) can still pivot in the reverse direction (R) with respect to the locking element (23) and thus unlock the locking element (23).

3. Assembly according to Claim 1 or 2, **characterized in that** the locking element (23) comprises at least one elastic tongue (29) whose free end (30) is able to bear against a stop (21, 22) of the clearance compensation element (8) in the locking position, the said tongue (29) being disengaged elastically from the said stop (21, 22) in the unlocking position so as to allow the movement of the clearance compensation element (8) under the effect of the elastic return means (14).

4. Assembly according to one of Claims 1 to 3, **characterized in that** the clearance compensation element (8) comprises teeth (12) able to bear against the splines (3) of the driving member (1) or of the driven member (2) in the second position of the clearance compensation element (8) or in a case of the driving member (1) being driven by the driven member (2).

5. Assembly according to one of Claims 1 to 4, **characterized in that** the locking element (23) is mounted on the driven member (2) via at least one rivet (10) engaged in an oblong opening (25) of the locking element (23), the down point of the rivet (10) on one (25b) of the ends (25a, 25b) of the said opening (25) forming the stop allowing the rotation of the locking element (23) to be limited in the reverse direction (R).

6. Assembly according to Claim 5, **characterized in that** the said rivet (10) also serves for mounting the clearance compensation element (8) on the driven member (2).

7. Assembly according to one of Claims 1 to 6, **characterized in that** the locking element (23) and the clearance compensation element (8) are annular and comprise complementary means (38, 39, 42, 41) which make it possible to axially immobilize the locking element (23) with respect to the clearance compensation element (8) while allowing their relative rotation.

8. Assembly according to Claim 7, **characterized in that** the locking element (23) or, respectively, the clearance compensation element (8) comprises at least one groove in which there is engaged an internal or external peripheral edge (41) of the clearance compensation element (8) or, respectively, of the locking element (23).

9. Assembly according to Claim 8, **characterized in that** the groove is delimited by a radial wall (40) of the locking element (23) or, respectively, by a radial wall of the clearance compensation element (8), and by a tab (38).

10. Assembly according to Claim 1 or 2, **characterized in that** the locking element (23) comprises a cam surface (45, 53) able to cooperate with a complementary cam surface (47, 54) of the driven member (2), the locking element (23) comprising a stop (45, 51) able to bear against a bearing surface (46, 52) of the clearance compensation element (8) in its locked position and able to be offset from the said bearing surface (46, 52) in its unlocked position, the locking element (23) being able to pass from its locked position to its unlocked position by cooperation of the said cam surfaces (45, 53; 47, 54).

11. Assembly according to Claim 10, **characterized in that** the locking element (23) comprises a bearing zone (43, 48) intended to bear (44, 49) against the driven member (2) after unlocking.

12. Assembly according to Claim 10 or 11, **characterized in that** the cam surfaces (45, 47) of the locking element (23) and of the clearance compensation element (8) are designed to axially offset the stop (45) of the locking element (23) with respect to the corresponding bearing surface (46) of the clearance compensation element (8), so as to unlock the locking element (23).

13. Assembly according to Claim 10 or 11, **characterized in that** the cam surfaces (53, 54) of the locking element (23) and of the clearance compensation element (8) are designed to axially offset the stop (51) of the locking element (23) with respect to the corresponding bearing surface (52) of the clearance compensation element (8), so as to unlock the locking element (23).

14. Assembly according to one of Claims 10 to 13, **characterized in that** the locking element (23) is tiltably mounted with respect to the clearance compensation element (8) between a locked position and an unlocked position, the cam surfaces (45, 53; 47, 54) of the said elements (8, 23) being able to tilt the locking element (23) towards its unlocking position.

15. Assembly according to Claim 14, **characterized in that** the locking element (23) comprises an oblong hole (55) in which a stud (56) of the clearance compensation element (8) is mounted.

16. Assembly according to one of Claims 1 to 15, **characterized in that** the driving member (1) is a part of a dual mass flywheel and the driven member (2) is a part of a clutch.

17. Method for mounting an assembly according to one of Claims 1 to 6, **characterized in that** it comprises the steps consisting in:
- mounting the clearance compensation element (8) on the driven member (2),
- mounting the locking element (23) on the driven member (2),
- positioning the locking element (23) with respect to the clearance compensation element (8) so as to be able to engage the elastic return means (14) between the said elements (8, 23),
- mounting the elastic return means (14) between the locking element (23) and the clearance compensation element (8),
- positioning the locking element (23) with respect to the clearance compensation element (8) so as to be able to lock the locking element (23), thereby constraining the elastic return means (14),
- locking the locking element (23).

18. Method for mounting an assembly according to one of Claims 7 to 9, **characterized in that** it comprises the steps consisting in:
- assembling the locking element (23) and the clearance compensation element (8) with the aid of the complementary means (38, 39, 42, 41) which make it possible to axially immobilize the locking element (23) with respect to the clearance compensation element (8) while allowing their relative rotation,
- positioning the locking element (23) with respect to the clearance compensation element (8) so as to be able to engage the elastic return means (14) between the said elements (8, 23),
- mounting the elastic return means (14) between the locking element (23) and the clearance compensation element (8),
- mounting the subassembly formed above on the driven member (2),
- positioning the locking element (23) with respect to the clearance compensation element (8) so as to be able to lock the locking element (23), thereby constraining the elastic return means (14),
- locking the locking element (23).

19. Method according to Claim 17 or 18, **characterized in that** the locking element (23) is locked by positioning the free end (30) of the elastic tongue (29) in bearing contact against the corresponding stop (21, 22) of the clearance compensation member (8), counter to the elastic return force of the tongue (29), this locking position of the elastic tongue (29) being maintained by the stress exerted by the elastic return means (14).

20. Method for mounting an assembly according to one of Claims 10 to 16, **characterized in that** it comprises the steps consisting in:
- mounting the locking element (23) on the clearance compensation element (8),
- positioning the clearance compensation element (8) with respect to the locking element (23) so as to be able to engage the elastic return means (14) between the said elements (8, 23),
- mounting the elastic return means (14) between the locking element (23) and the clearance compensation element (8),
- positioning the locking element (23) with respect to the clearance compensation element (8) so as to be able to lock each locking element (23), thereby constraining the elastic return means (14),
- locking the locking element (23),
- mounting the subassembly formed by the clearance compensation element (8), by the locking element (23) and by the elastic return means (14) on the driven member (2).
